(19) Europäisches Patentamt
European Patent Office
Office européen des brevets

(11) **EP 4 390 837 A1**

(12) **EUROPEAN PATENT APPLICATION**

(43) Date of publication:
**26.06.2024 Bulletin 2024/26**

(21) Application number: **22307002.0**

(22) Date of filing: **22.12.2022**

(51) International Patent Classification (IPC):
**G06T 7/00** (2017.01)   **G06T 7/11** (2017.01)

(52) Cooperative Patent Classification (CPC):
**G06T 7/11;** G06T 2207/20084; G06T 2207/30004;
G06T 2207/30008; G06T 2207/30081;
G06T 2207/30101; G06T 2207/30104

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imagine Institut des Maladies Génétiques
Necker Enfants Malades
75015 Paris (FR)**
• **Assistance Publique Hôpitaux de Paris
75012 Paris (FR)**
• **Université Paris Cité
75006 Paris (FR)**

• **Institut National de la Santé et de la Recherche
Médicale
75013 Paris (FR)**
• **Institut Mines Telecom
91120 Palaiseau (FR)**

(72) Inventors:
• **BLOCH, Isabelle
Paris (FR)**
• **DELMONTE, Alessandro
Courbevoie (FR)**
• **SARNACKI, Sabine
Paris (FR)**

(74) Representative: **Novagraaf Technologies
Chemistry & Life Sciences
2, rue Sarah Bernhardt
CS90017
92665 Asnières-sur-Seine Cedex (FR)**

(54) **AUTOMATIC GENERATION OF 3D ANATOMICAL MODELS**

(57)   A method for generating segmented images representing anatomic structures is disclosed. The method comprises: performing a segmentation of an input image to generate a first, second and third segmented images by detecting voxels that represent respectively a bone, an organ or a vessel and using respectively a first, second and third 3D convolutional neural network, CNN, applied to the input image. The method comprises performing a segmentation of the input image to generate a fourth segmented image by detecting voxels that represent a bone, an organ or a vessel using a fourth 3D CNN; and generating an aggregated segmented image by combining the segmented images. The fourth 3D CNN is a multi-structure neural network trained to detect bones, vessels and at least one organ. The first 3D CNN is a bones specific neural network trained to detect one or more bones. The second 3D CNN is an organ specific neural network trained to detect one or more organs. The third 3D CNN is a vessels specific neural network trained to detect one or more vessels in an image.

FIG. 12

EP 4 390 837 A1

**Description**

TECHNICAL FIELD

Various example embodiments relate generally to a method / device for automatic segmentation of medical images and a method / device for representing the segmented image together with the peripheral nervous system.

BACKGROUND

Imaging data are nowadays essential for the construction of an efficient and if possible non-invasive surgical strategy. This preparation is routinely performed using 2D images (slices), in an environment that is often not very interactive, which limits the visualization of the anatomy in its volume. The segmentation of volumetric images (e.g. MRI Magnetic Resonance Images, CT, Computed (ou computerized) Tomography) allows the creation of specific 3D models of the patient and provides the surgeon with a realistic vision to better anticipate difficulties.

However, the segmentation of anatomical structures is a complex procedure that requires a high production time and is not compatible with clinical practice. This operation must be performed by a person with a background in radiology and computer science, greatly limiting the adoption of 3D technologies for surgical patient care, particularly detrimental for complex operations such as deformity corrections or cancer resections. Automation of medical image segmentation is therefore essential for rapid deployment of 3D solutions.

Existing solutions are not able to represent the peripheral nervous system, which is key information to preserve the motor and physiological functionalities of patients.

There is a need for efficient and automatic segmentation of medical images that is suitable for pediatric medical images with pathological cases.

SUMMARY

The scope of protection is set out by the independent claims. The embodiments, examples and features, if any, described in this specification that do not fall under the scope of the protection are to be interpreted as examples useful for understanding the various embodiments or examples described herein.

According to a first aspect, a method for generating segmented images representing anatomic structures including at least one bone, at least one organ or at least one vessel is disclosed. The method comprises: performing a segmentation of an input image to generate a first segmented image by detecting voxels that represent a bone using a first 3D convolutional neural network, CNN, applied to the input image, wherein the first 3D CNN is a bones specific neural network trained to detect one or more bones in an image; performing a segmentation of the input image to generate a second segmented image by detecting voxels that represent an organ using a second 3D CNN applied to the input image, wherein the second 3D CNN is an organ specific neural network trained to detect one or more organs in an image; performing a segmentation of the input image to generate a third segmented image by detecting voxels that represent a vessel using a third 3D CNN applied to the input image, wherein the third 3D CNN is a vessel specific neural network trained to detect one or more vessels in an image; performing a segmentation of the input image to generate a fourth segmented image by detecting voxels that represent a bone, an organ or a vessel using a fourth 3D CNN applied to the input image, wherein the third 3D CNN is a multi-structure neural network trained to detect bones, vessels and at least one organ in an image; generating an aggregated segmented image by combining the first, second, third and fourth segmented images.

A voxel in the aggregated image may be a corresponding voxel of the fourth segmented image if the corresponding voxels in the first, second, third segmented images are detected as representing distinct anatomic structures.

One or more or each of the first, second, third and fourth 3D CNNs may be based on a U-Net architecture.

One or more or each of the first, second, third and fourth 3D CNNs may have been trained using a loss function defined as a weighted sum of specific loss functions, wherein weighting coefficients of the weighted sum are specific to the considered 3D CNNs. A first specific loss function may measure an accuracy based on global information over a 3D volume in a reference segmented image and a current segmented image. A second specific loss function may measure local consistency between voxels in a reference segmented image and a current segmented image. A third specific loss function measures a distance between boundary points of a reference segmented image and a current segmented image. The weighting coefficients may vary dynamically during the training of the 3D CNNs.

One or more or each of the first, second, third and fourth 3D CNNs may have been trained using image patches extracted from the input image, wherein the centers of the image patches have coordinates determined using a sampling algorithm adapted to the type of anatomic structure to be detected by the considered 3D CNNs.

The method may comprise: determining for the input image a bounding box of interest using a deep regression network; applying one or more or each of the first, second, third and fourth 3D CNNs only to the bounding box of interest.

The method may comprise: obtaining 3D representation of fibers present in the input image; detecting at least one fiber representing a nerve in the input image using the output segmented image and nerve definitions, wherein a definition of a nerve is expressed in the form of one or more spatial relationships between the nerve and one or more anatomical structures detected in the output segmented image and using a fuzzy 3D anatomical area corresponding to the nerve definition.

A score may be associated to each voxel in the fuzzy anatomical 3D area. The method may comprise: computing for each of one or more fibers a fiber score as the sum of scores of voxels representing the concerned fiber that fall in the fuzzy 3D anatomical area, wherein a detected nerve is represented by at least one fiber that is fully or partly within the fuzzy anatomical 3D area and has a score higher than a threshold.

The method may comprise: obtaining a segmentation mask of an anatomical structure used in the nerve definition; obtaining the fuzzy anatomical 3D area by dilating the segmentation mask based on a structuring element, the structuring element encoding at least one of a direction information, path information and connectivity information of a spatial relationship of the nerve definition.

At least one other example embodiment provides an apparatus comprising at least one processor and at least one memory including computer program code. The at least one memory and the computer program code are configured to, with the at least one processor, cause the apparatus to perform step of the method according to the first aspect.

According to one or more examples, the at least one memory and the computer program code may be configured to, with the at least one processor, cause the apparatus to perform step of the method according to the first aspect.

Generally, the at least one memory and the computer program code are configured to, with the at least one processor, cause the apparatus to perform one or more or all steps of a method for generating segmented images representing anatomic structures as disclosed herein.

One or more example embodiments provide an apparatus comprising means for performing one or more or all steps of a method for generating segmented images representing anatomic structures as disclosed herein.

Generally, the apparatus comprises means for performing one or more or all steps of a method for generating segmented images representing anatomic structures as disclosed herein. The means may include circuitry configured to perform one or more or all steps of the method for generating segmented images representing anatomic structures as disclosed herein. The means may include at least one processor and at least one memory including computer program code, wherein the at least one memory and the computer program code are configured to, with the at least one processor, cause the apparatus to perform one or more or all steps of the method for generating segmented images representing anatomic structures as disclosed herein.

At least one example embodiment provides a non-transitory computer-readable medium storing computer-executable instruction that, when executed by at least one processor at an apparatus, cause the apparatus to perform a method according to the first aspect.

Generally, the computer-executable instructions cause the apparatus to perform one or more or all steps of a method for generating segmented images representing anatomic structures as disclosed herein.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows a block diagram of a training system for image segmentation according to an example.
FIG. 2 shows a general flow chart of a method for training supervised machine learning algorithms according to an example.
FIG. 3 shows statistical distributions of a training dataset according to an example.
FIG. 4 show a block diagram of a bounding box detection sub-system according to an example.
FIG. 5 show a block diagram of a convolutional neural network for image segmentation according to an example.
FIG. 6 show a block diagram of a sub-system for ensemble learning according to an example.
FIG. 7 shows a block diagram of a trained image segmentation system according to an example.
FIG. 8 shows a general flow chart of a method for generating segmented images according to an example.
FIG. 9 show a flow chart of a method for generating a 3D anatomical model.
FIG. 10 shows a general flow chart of a method for nerve detection.
FIG. 11A illustrates a fuzzy geometrical area for a spatial definition of a nerve according to an example.
FIG. 11B illustrates a fuzzy anatomical area for a spatial definition of a nerve according to an example.
FIG. 11C illustrates spatial definitions of a nerve according to examples.
FIG. 12 shows a diagram illustrating aspects of a method for nerves recognition according to an example.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

A method and corresponding system for the automatic segmentation of medical images will now be described in detail in the context of its application to pediatric medical images (e.g. MRI images, Magnetic Resonance Imaging, and/or CT images, Computed Tomography images) of pelvis. The method allows to identify the major anatomical structures (including coaxial bones, sacrum, internal and external iliac vessels, and organs like bladder, colon, digestive tract, pelvic muscles) as well as to represent the peripheral nervous network (including sacral plexus, pudendal plexus, hypogastric plexus).

A complete segmentation of the patient's pelvis is produced without or with only very reduced number of interactions with the user. A refinement process for error correction and validation by a user may be implemented for clinical consistency and allow to generate 3D anatomical models adapted to the surgical preparation or for any further uses.

The method comprises two main phases:

- phase A/ anatomical structure segmentation (without the nerves) or "segmentation phase A" and
- phase B/ nervous system extraction from diffusion-weighted MRI images or "nerve detection phase B" (nerves detection and integration in the segmented images resulting from the anatomical structure segmentation phase A).

The method allows extraction of clinical information of surgical interest from medical images, for example diffusion-weighted MRI sequences (dMRI) with following parameters: 25 directions, b = 600, a voxel size of 1.25x1.25x3.5 mm, TE = 0.0529s and TR = 4s and T2-weighted MRI sequences (T2w) with the following parameters: TE = 0.065945s and TR = 2.4s (TE is the echo time, TR is the repetition time and b is the b-value). As known in the art of medical imaging, dMRI images are functional MRI sequence highlighting the water in tissues while T2 weighted images are standard diagnostic sequences.

The segmentation phase A uses an artificial intelligence (AI) algorithm based on supervised machine learning, exploiting a database of MRI and pediatric CT scans, allows a rapid and completely automatic modeling of the anatomical structures of the patient's pelvis. The AI system is trained (during a training phase A1) based on reference images manually annotated by expert surgeons before the AI system can be used on new images during a second phase (referred to herein as the inference phase A2). This AI system is modular and comprises sub-systems for localization (determination of bounding box defining a region of interest), semantic segmentation and assisted refinement based on error correction. The system implements an easily usable and very fast 3D anatomical model production chain adapted to clinical surgical deadlines. The 3D anatomical models can be integrated into a visualization application for more efficient preoperative planning.

The nervous system representation phase B uses as input segmented images representing bones, organs and/or vessels obtained as output of the phase A or using any other image segmentation method that generate images representing bones, organs and/or vessels.

The nervous system representation phase B allows the reconstruction of the peripheral nervous system and the fine nerve structures and the exploration of nerve (including lumbosacral nerve roots). The reliability and clinical consistency of the reconstructed nerves is ensured by a symbolic AI system integrating surgical anatomical knowledge, expressed in the form of spatial relationships and geometric properties. The symbolic AI system uses fuzzy definitions to consider the inaccuracies of the clinical definitions and to adapt to the anatomical modifications resulting from the various pathologies. The modeling of anatomical knowledge is performed with a maximum consistency with patient anatomy. For example, a complete representation of the sacral plexus in children and visualization of the autonomic system in adults may be achieved.

The method has been tested on pelvic medical images and allows a complete automation of the image segmentation process. Automatic segmentation algorithms of the main pelvic structures (e.g. bone, sacrum, vessels, bladder, colon) with an accuracy (measured with the Dice index) higher than 90% has been achieved. The algorithm was always able to locate the pelvis region of the image in the initialization step (see below). The segmentation time necessary during the inference phase A2, using the trained segmentation system, was greatly reduced: 2 minutes instead of 2 hours for the coaxial bones segmentation with existing systems.

The method was consistently able to represent the sacral plexus well in children. Anatomical variations related to different pathologies were well considered and users positively evaluated the contribution for preoperative planning, especially for neurogenic tumors. Visualization of nerves anterior to surgery allowed the sciatic nerve to be spared in two cases of neuroblastoma and one case of neurofibroma. Different quantitative metrics have demonstrated the correlation between the development of the pelvic nerve network and several types of anorectal malformations.

The method can be adapted to normal and pathological images, whether patients are children or adults. The method disclosed herein may be used and developed for example for the structural and functional modeling of various body regions (e.g. genital system, thoracic organs, facial nerve etc.) both for children and adults.

In the present description, four types of anatomical structures are considered: vessels, bones, organ and nerves. The term "organ" is used herein to refer to anatomical structures other than vessels, nerves and bones and may include stomach, heart, muscles (piriformis, coccygeal, obturator and levator ani), bladder with the ureters, female genital system (vagina, uterus and ovaries), colon, rectum, digestive tract, pelvic, etc.

In the described embodiments and examples the images are MRI images but the system is likewise applicable to other type of medical images adapted to image various anatomical structure (vessels, bones, organs and nerves). The MRI images are here 3D (three dimensional) images.

A system for an accurate computer-assisted modeling of the major organs-at-risk (OAR) from pre-operative MRI images of children with tumors and malformations is disclosed. The system is based on supervised learning techniques using deep neural networks with convolutional layers. The system automatically adapts functions and parameters based on the structure of interest. Additionally, a set of symbolic artificial intelligence methods are used for an accurate representation of the peripheral nervous network via diffusion imaging (dMRI) processing.

A collection of more than 150 training images (MRI and CT images) may be acquired. All anatomical structures of interest are manually segmented by surgeons to generate corresponding reference (manually) segmented images. The segmentation algorithm is then trained with the training image/reference (manually) segmented image pairs to learn the correspondence between voxel properties and organ labels.

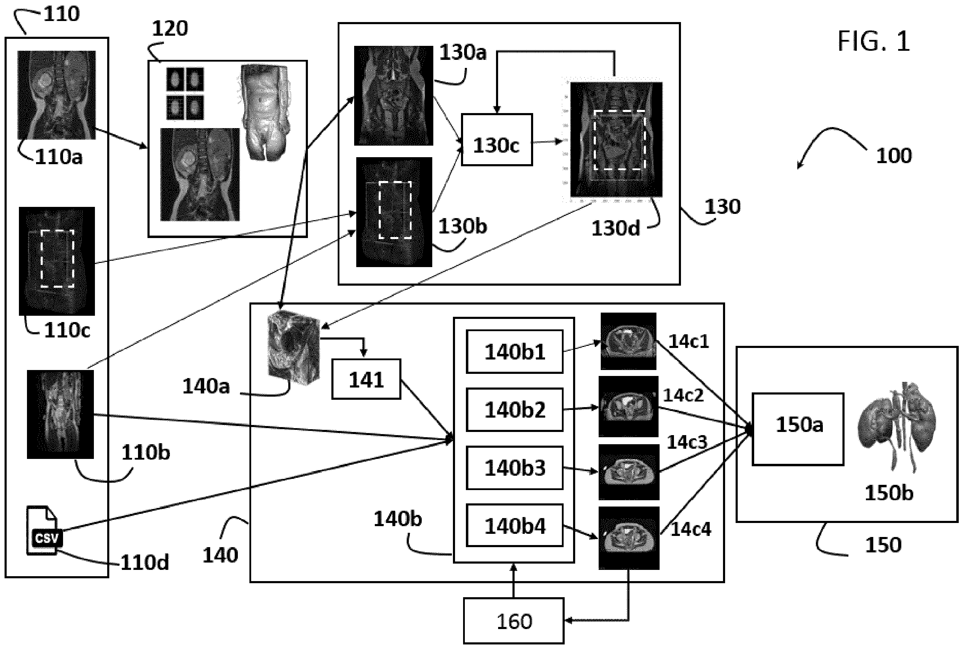

FIG. 1 shows a block diagram of a training system 100 according to an example. The training system 100 is configured to train several machine learning algorithms allowing the segmentation of medical images.

The training system 100 may include one or more sub-systems among: a preprocessing sub-system 120, a detection sub-system 130, a segmentation sub-system 140, an aggregation sub-system 150, a refinement sub-system 160.

Training data 110 are provided at the input of the training system 100 and may be used as described herein by the different sub-systems.

The training data 110 may include training input images 110a (i.e. training raw images), reference segmented images 110b (also referred to as the ground truth) corresponding to respective training raw images, bounding boxes parameters 110c defining regions of interest (i.e. reference bounding boxes 130b) in the raw images and annotation data 110d.

The reference segmented images 110b and bounding boxes parameters 110c may be generated manually by expert users from training input images 110a, e.g. using some drawing software tool allowing to select, for each anatomical structure represented in an input image, the voxels representing this anatomical structure and provide an identification of the anatomical structure. For generating a segmented image from an input image, a user may draw a contour of a region of interest in the input image and enter a label identifying the anatomical structure represented by this region of interest and repeat this operation for each anatomical structure (bone, vessel or organ) that is visible in the input image.

The annotation data 110d may likewise be generated manually. The annotation data 110d may include a bounding box (e.g. defined in a 3D space) of an anatomical region of interest (e.g. the pelvic region). The annotation data 110d may include the labels, i.e. the identification of the anatomical structures detected in the segmented images during the manual segmentation. The annotation data 110d may further include patient identification information (sex, age) and medical information (diagnosis, pathology, surgical approach, etc.).

The preprocessing sub-system 120 is configured to perform preprocessing operations on the training input images 110a to generate training preprocessed images 130a from the training input images 110a.

The detection sub-system 130 is configured to train a bounding box detection algorithm 130c using as training data the training preprocessed images 130a and the corresponding reference bounding boxes 130b. The bounding box detection algorithm 130c is configured to generate a bounding box 130d based on a training preprocessed image 130a.

The detection sub-system 130 is further configured to generate a reduced training preprocessed image 140a from a training preprocessed image 130a generated by the preprocessing sub-system 120 and a corresponding 3D bounding box 130d generated by the bounding box detection algorithm 130c.

The bounding box detection algorithm 130c is a supervised machine learning algorithm adapted to detect in a 3D image a 3D bounding box defining a region of interest. The reference bounding boxes 130b of the training preprocessed images 130a may be determined from the corresponding reference segmented images 110b and/or bounding boxes parameters 110c entered by surgeons.

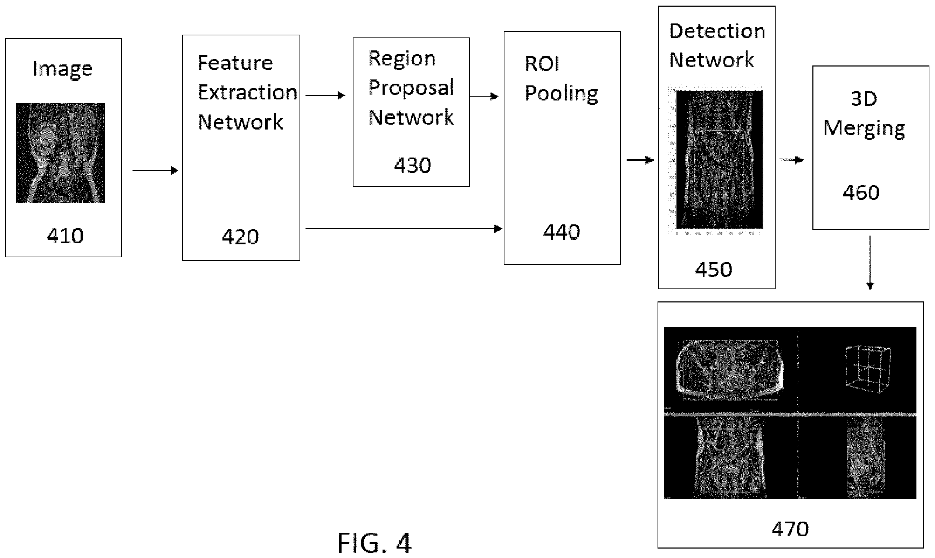

The bounding box detection algorithm 130c may include a deep neural network. A 2D deep neural network may be used for improving speed and portability. The deep neural network may be based on a 2D Faster R-CNN architecture using a ResNet-101 backbone model trained on the ImageNet dataset. According to an example, this architecture may include: a feature extraction network 420, a region proposal network (RPN) 430 with a ROI (region of interest) pooling module 440, a detection network 450 and a 3D merging module 460. An example architecture will be described in detail for example by reference to FIG. 4.

Back to FIG. 1, the segmentation sub-system 140 is configured to train several segmentation algorithms 140b (i.e. the segmentation neural networks 140b1, 140b2, 140b3, 140b4) using as training data the reduced training preprocessed images 140a and the corresponding reference segmented images 110b. The segmentation algorithms 140b may be supervised machine learning algorithms adapted to perform segmentation. They may be implemented as neural networks and are also designated herein as the segmentation neural networks. Each of the segmentation neural networks is implemented as a 3D convolutional neural network.

A first segmentation neural network 140b1 is a bones specific neural network trained to detect one or more bones in an image and is also referred herein as the bones segmentation neural network. The bones segmentation neural network is also designated herein as a specific neural network for bones or bones specific neural network.

A second segmentation neural network 140b2 is a vessels specific neural network trained to detect one or more vessels in an image and is also referred herein as the vessels segmentation neural network. The vessels segmentation neural network is also designated herein as a specific neural network for vessels or vessels specific neural network.

A third segmentation neural network 140b3 is an organ specific neural network trained to detect one or more organs in an image and is also referred herein as the organs segmentation neural network. The organs segmentation neural network is also designated herein as a specific neural network for organs or organs specific neural network.

A fourth segmentation neural network 140b4 is a multi-structure neural network trained to detect at the same time bones, vessels and at least one organ in an image. The fourth segmentation neural network is also referred herein as the multi-structure segmentation neural network or the multi-structure neural network or the multi-structure model.

For each reduced training preprocessed image 140a received as input, four segmented images may be generated respectively by the fourth neural networks 140b1-140b4:

- a first segmented image 14c1 showing one or more detected bones is generated by the bones segmentation neural network;
- a second segmented image 14c2 showing one or more detected vessels is generated by the vessels segmentation neural network;
- a third segmented image 14c3 showing one or more detected organs is generated by the organs segmentation neural network;
- a fourth segmented image 14c4 showing one or more detected anatomical structures (including vessels, bones or organs) is generated by the multi-structure segmentation neural network.

The segmentation sub-system 140 may apply a patch extraction algorithm 141 to each training reduced preprocessed image 140a received as input to extract one or more training patches for each input image and train the segmentation neural networks 140b1-140b4 using these training patches as input. This allows to reduce the processing time required for training the segmentation neural networks.

The aggregation sub-system 150 includes an aggregation function 150a configured to compare these three segmented images 14c1-14c3 at the output of the specific segmentation networks and to detect inconsistencies between the three segmented images 14c1-14c3 when the corresponding voxels in at least two of these segmented images represent distinct anatomic structures.

In case of inconsistencies between the three segmented images 14c1-14c3, probability scores may be computed voxel-wise to determine which label is correct for a given voxel. A probability score may be computed using a voxel-wise softmax function applied to the segmented image 14c4 at the output of the multi-structure segmentation network 140b4 as reference which is compared with the corresponding output of the voxel-wise softmax applied to the segmented images 14b1-14b3 obtained at the output of the other specific segmentation networks 140b1-. The aggregation function 150a will assign, to the inconsistent voxels, the label corresponding to the label with the maximum probability score. In another embodiment, the label of the output segmented image 14c4 is used for replacing the inconsistent voxels in the combined image.

The aggregation function 150a is further configured to generate an aggregated segmented image 150b from the four segmented images 14c1-14c4 at the output of the specific segmentation networks 140b1-140b3 and multi-structure segmentation neural network 140b4.

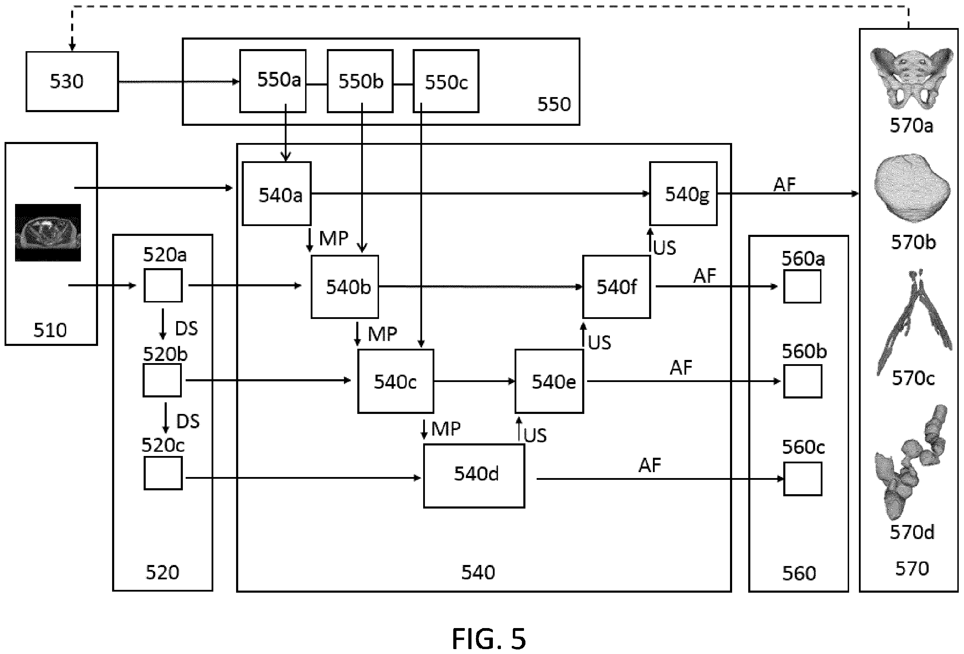

The refinement sub-system 160 is configured to implement an automatic refinement process simulating user inputs (e.g. generated by a random algorithm) identifying one or more erroneous voxel encoded as a false positive or respectively false negative. The refinement sub-system 160 is configured to receive as input a given segmented image 14c1-14c4 and to generate an interaction map fed to one or more additional convolution layers of one or more concerned neural networks 140b1-140b4 having generated the concerned segmented image. Examples and further aspects of a refinement sub-system will be described by reference to FIG. 5.

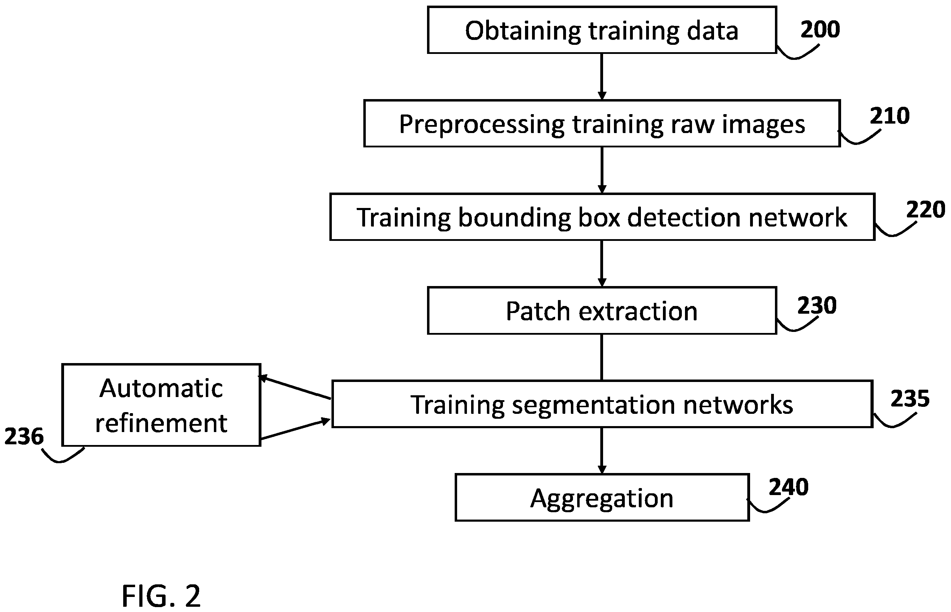

Further aspects of the training system 100 will be described by reference to the FIGS. 2-6.

FIG. 2 shows a general flow chart of a method for training supervised machine learning algorithms according to one or more examples. The method may be implemented using the training system 100 described for example by reference to FIG. 1.

At step 200, training data are obtained. The training data includes for examples training input images 110a, reference segmented images 110b corresponding to respective training raw images, bounding boxes parameters 110c defining regions of interest (i.e. reference bounding boxes 130b) in the raw images and annotation data 110d. For a training input image, at least one reference segmented image and a bounding box is available.

### Input dataset

In one or more embodiments, the input dataset may include more than 200 abdominal MRI raw images of children between 0 and 18 years old. For each patient, one volumetric T2 weighted (T2w) MRI image of the abdomen area 110a is acquired. MRI sequences have been optimized to maximize the modeling precision and to minimize the acquisition time. MRI sequences can be used in clinical settings. Annotation data 110d are automatically created in which for each patient the following information are stored: dates, diagnosis, pathology, surgical approach, organs status and image properties.

### Population

The population consisting of 131 unique uncorrelated patients have been used for a total of 171 MRI raw images. Among them, 32 patients disposed of pre- and postoperative imaging.

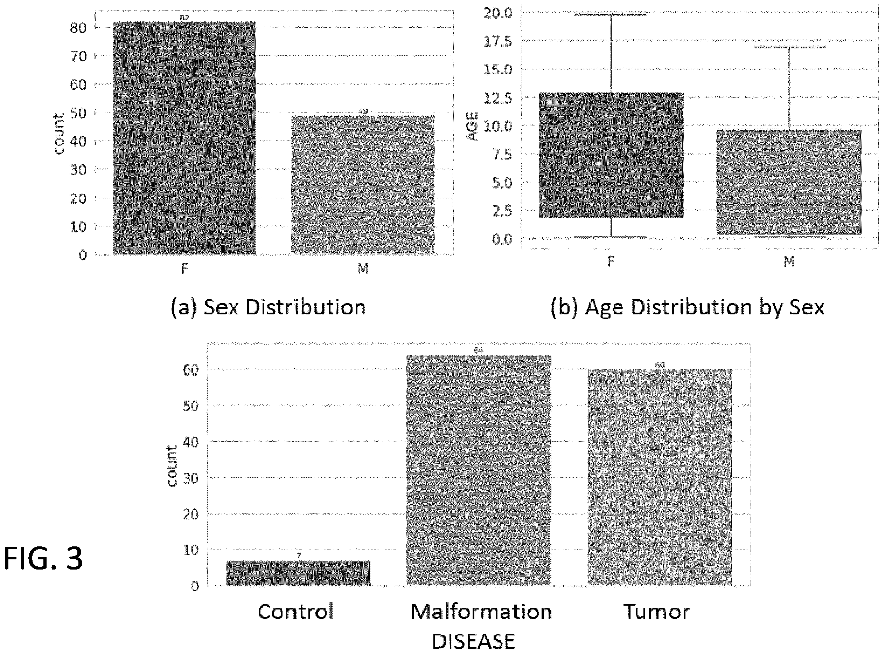

FIG. 3 shows the input dataset descriptive distributions: (a) Sex Distribution; (b) Age Distribution by Sex; (c) Pathology distribution. The population is composed by 82 females and 49 males. At the time of the image acquisition: 34 (25.95%) patients had less than 1 year, 16 (12.21 %) were between 1 and 3 years old, 20 (15.27%) were between 3 and 6 years old, 11 (8.39%) were between 6 and 9 years old, 14 (10.69%) were between 9 and 12 years old, 23 (17.56%) were between 12 and 15 years old, 13 (9.92%) had more than 15 years. Females had a mean age of 92.73 months (+- 68.11 months), a median age of 89.50 months (25th percentile: 23.25 months, 75th percentile: 154.00 months). Males had a mean age of 59.48 months (+-64.60 months), a median age of 36.00 months (25th percentile: 5.00 months, 75th percentile: 115.00 months). The population is divided into 3 categories: Tumors, Malformations and Controls. It is composed by 64 pelvic malformation, 60 pelvic tumors and 7 control patients (no visible pathologies at the moment of image acquisition). Tumors had a mean age of 101.267 months (+- 65.70 months), malformations had a mean age of 50.78 months (+- 57.97 months), controls had a mean age of 170.43 months (+- 27.56 months).

### Manual Annotations

The manual segmentation of anatomical structures may be performed in various ways. Each anatomical structure may be identified by a label (e.g. a specific voxel value used for identifying this anatomical structure in the segmented image). For example, pelvic organs segmentation is manually performed by several expert pediatric surgeons on the T2w images. The anatomical structures segmented may include: pelvic bones (hips and sacrum) and muscles (piriformis, coccygeal, obturator and levator ani), bladder with the ureters, female genital system (vagina, uterus and ovaries), colon and rectum, iliac vein and arteries.

Due to the age and field of view difference, the position and visibility of organs and structures can greatly vary between images. For each image, a bounding box limiting a region of interest is defined. For pelvic images, the bounding box may be delimited at upper side by the location of the iliac arteries bifurcation and at the bottom by the lowest point of the perineum.

For each training image, a manual contouring of the organs-at-risks is performed. For example, specific regions are identified in the image (e.g. sacral canal, sacral holes and ischial spine). An image resulting from this manual contouring is usually defined as the 'ground truth' and is also referred to herein as the reference segmented image. The ground truth is used for the training of deep neural networks as reference during loss function calculation.

Each training image may be manually annotated with the bounding box parameters 110c including the coordinates of the minimal bounding box containing all the labels (e.g. the smallest bounding box of the images containing all the anatomical structure of interest).

For the training images, the manually segmented images (reference segmented images 110b) of the hip bone and the sacrum may be used to automatically determine the bounding box and annotate the training images with a bounding box to generate the annotated images showing the reference bounding boxes 130b. Bounding box may be defined by six values $(x_1, x_2, y_1, y_2, z_1, z_2)$ where $x_1$ and $x_2$ are respectively the lowest and highest axial coordinates of manual segmentation, $y_1$ and $y_2$ are respectively the lowest and highest coronal coordinates of manual segmentation, $z_1$ and $z_2$ are respectively the lowest and highest sagittal coordinates of manual segmentation,

K-fold training

The input dataset may be divided into a training dataset, validation data set and a test dataset, for example with a 95% (training + validation) to 5% (test) ratio. The validation data set is used during the training loop to check whether the concerned model (i.e. the convolutional neural network) is behaving as expected (loss function decreasing, evaluation metrics increasing) and to evaluate if it is sufficiently trained or not. The test data set is used to accurately evaluate the model performance independently of the data used during the training loop.

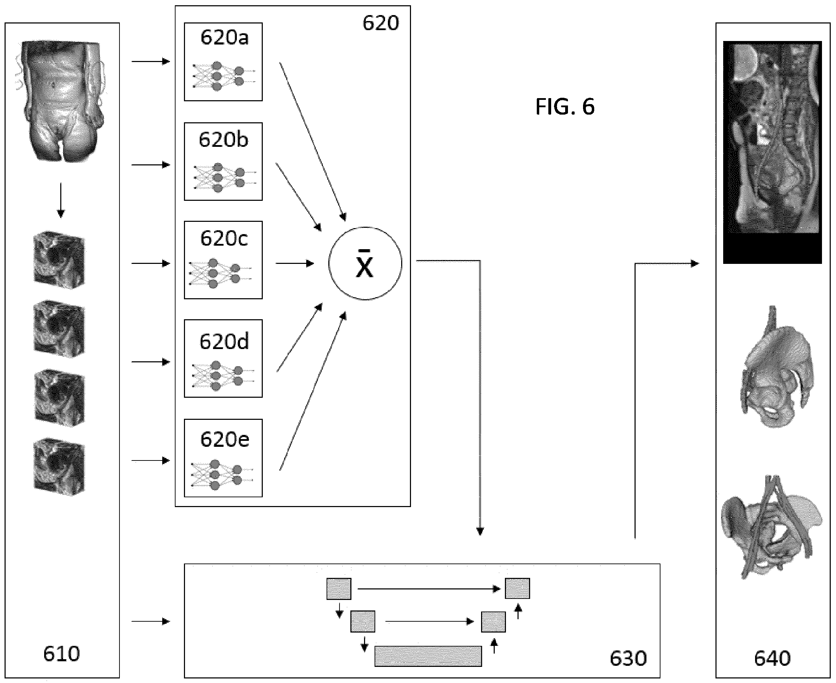

A k-fold dataset split may be performed on the input dataset to enable ensemble learning. In ensemble learning, base models are trained for different folds and used as building blocks for designing more complex models that combines several base models. One way to combine the base models is to perform random selection according to which the base models are trained independently from each other in parallel and then combined using a deterministic averaging process. Another way to combine the base models is to perform bootstrap aggregating (bagging) selection according to which the base models are trained sequentially in an adaptive way and then combined using a deterministic process. An example of ensemble learning algorithm is described for example by reference to FIG. 6.

A random k-fold splitting or bootstrap aggregating may be used. Since a high correlation between the type of pathology, age and sex has been detected, the training dataset is split into folds to stratify the patients based on the pathology only (tumor vs. malformation vs. control): thus, the pathology may be used to perform the k-fold dataset split. For bagging selection, we put no limit on the amount of replacement sampled meaning that a sample image may be present multiple times in a fold. The training dataset is split for example into 5 folds in order to leverage all data available (e.g. all images are present at least once in the training set). Each fold is then divided in training subset, validation subset and a test subset, for example with a respective ratio of 80% training, 15% validation and 5% test.

Back to FIG. 2, steps 210 to 240 may be performed for each training fold or until a training criterion is met (the training criterion is checked for a total number of epochs for step 220 and for a total number of epochs or small validation metrics improvement (less than $1e^{-4}$ increase for a validation metric over the last 20 iterations) for step 235)

At step 210, a training input image is preprocessed to generate a training preprocessed image. One or more of the below preprocessing operations may be performed on the training preprocessed images: cropping of non-zero region, correction of bias field artifacts, correction of image orientation, resampling of images, clipping function and normalization.

A cropping of non-zero region may be performed since a voxel with zero value does not correspond to an anatomical structure.

A correction of bias field artifacts generated by the image acquisition MRI system may be performed using for example nonparametric non-uniform normalization.

As the image acquisition protocols may vary from an acquisition system to another, a correction of image orientation may be performed to have all images in the same format (e.g. the NIfTI standard) and representation space (in the RAS, right-anterior-superior, space).

A resampling of some images may be performed such that all images have the same resolution: this operation may include image resampling based for example on trilinear interpolation. The target voxel size for resampling may be the median image resolution of the entire input / training dataset (0.88x0.85x0.88 mm).

A clipping function may be applied to voxel values to keep only intensity values between the 0.5 and 99.5 percentile of the statistical distribution of the foreground voxels, the other voxels being considered as noise.

A normalization (e.g. Z-score normalization) of the images $I(x, y, z)$ may be performed such that all images have a unitary standard deviation. The mean image $\overline{I}(x, y, z)$ of an image $I(x, y, z)$ may computed as well as the value of the standard deviation $\sigma(I(x, y, z))$ over all voxels. The normalized image may be determined based on the below formula:

$$I(x, y, z) = \frac{I(x,y,z) - \bar{I}(x,y,z)}{\sigma\big(I(x,y,z)\big)}$$

At step 220, the training preprocessed images 130a are used as training data with their corresponding reference bounding boxes 130b to train the bounding box detection algorithm 130c. All image voxels outside the bounding box are set as background or all voxels outside the defined bounding box are ignored so as to reduce the processing time and reduce the search space during the segmentation. A reduced training preprocessed image is obtained after removal of the voxels outside the bounding box. By "reduced" image it is meant here that only the 3D portion of a training preprocessed image and the corresponding reference segmented image that falls in the corresponding bounding box are used.

The training of the bounding box detection algorithm 130c may be performed using only the bones labels: bones (e.g. the hips for the pelvic region) can be more easily detected and with less error than other anatomical structures, like vessels for example. In one or more embodiments, each training image in the training dataset is converted to a series of coronal slices, and all slices not containing the bones labels may be discarded. The coronal slices are provided as input to a 2D deep neural network used as bounding box detection algorithm 130c.

For the training, in order to have the final 3D search space to be used for segmentation, enlarged bounding boxes may be used to be sure that all anatomical structures of interest are located inside the enlarged bounding box. If the model is trained only on the bounding boxes detected for bones, the predicted bounding box may be automatically enlarged (e.g. by 5, 10 or 20%) in order to always include the iliac arteries bifurcation. The hips width (HW) is computed as the box axial width and the coordinates of the enlarged bounding box may be defined by increasing the height of the initial bounding box for example as:

$$BB = \big(x_1, x_2, y_1, y_2 + 20\%[x_2 - x_1], z_1, z_2\big)$$

where BB(x1, x2, y1, y2, z1, z2) is the initial bounding box.

A detection error is determined by comparing the detected bounding box BB and the corresponding reference bounding box 130b of the training preprocessed image 130a (ground truth bounding box), for example using the mean average precision as metric, and used to update the parameters of the bounding box detection algorithm 130c. The bounding box detection algorithm may be a deep convolutional neural network minimizing the categorical cross-entropy loss function in order to distinguish between foreground and background boxes. An example bounding box detection sub-system 130 and related algorithm is disclosed for example by reference to FIG. 4.

Back to FIG. 2, at step 230, salient regions (patches) of each reduced training preprocessed image are extracted to generate training patches to be transmitted to the segmentation algorithm: this prevents from exceeding the memory limits of the graphics card. Each reduced training preprocessed image is converted into a set of training patches. The centers of the image patches have coordinates determined using a sampling algorithm adapted to the type of anatomic structure to be detected by the considered 3D convolutional neural networks.

Several patch selection algorithms may be used: random sampling, uniform sampling, local minority sampling or co-occurrence balancing sampling. An appropriate patch selection algorithm aims at minimizing class imbalance and reducing the segmentation error in the case of very unbalanced data (e.g. organs with large differences in volume), a.k.a is configured to generate a subset of patches where thin and large structures are equally represented. Such a patch selection algorithm prevent overfitting on large organs and underfitting on small organs. For an N-class segmentation problem, a patch selection process that samples an equal number of voxels (1/N) for each class may be selected. Due to co-occurrence of labels this is a hard problem.

For each training epoch (one epoch may correspond to a time period after which the computation of the backpropagation algorithm is performed for all patches of the images belonging to the current fold in the training dataset) a dataset composed by randomly sampled image patches is created using the best suited algorithm for the different types of organ (i.e. one algorithm is selected for the vessels, the bones and the organs respectively). The patch selection may be iteratively refined, by selecting patches in order to minimize the Kullback-Leibler divergence between the current distribution of labels and the target distribution. As known in the art, the Kullback-Leibler divergence may be determined based on the below formula:

$$D(\hat{p} \parallel \hat{q}) = D_{KL}(\hat{p} \parallel \hat{q}) = \hat{p} \cdot \log_2\big(\frac{\hat{p}}{\hat{q}}\big)$$

where $\hat{p}$ represents the labels distribution over all the image patches in an epoch and $\hat{q}$ representing the target uniform distribution.

It has been determined that for the training of the bones segmentation neural network 140b1, the best suitable sampling algorithm is random sampling with 12 samples per image. For the training of the vessels segmentation neural network 140b2, the best suitable sampling algorithm is random sampling with 6 samples per image. For the training of the organ segmentation neural network 140b3, the best suitable sampling algorithm is random sampling with 12 samples per image. For the training of the multi-structure segmentation neural network 140b4, the best suitable sampling algorithm is co-occurrence balancing sampling.

Back to FIG. 2, at step 235, the training patches generated by the patch extraction algorithm 141 and the corresponding reference segmented image 110b are used to train the four segmentation neural networks 140b and generate at the output of the segmentation sub-system 140 four predicted segmented images 14c1 - 14c4.

Each segmentation neural network is trained to segment a given type of anatomical structure (i.e. configured to detect bones or vessels or organs, respectively) and trained independently of the other segmentation neural networks, thereby "specific neural networks" are obtained for each type of anatomical structure. A full-supervised learning approach is used based on the previously defined architecture, strategies and parameters.

After the last convolutional layer of a segmentation neural network, an activation function AF is applied to generate the segmented image.

For each type of anatomical structure of interest (bones, vessels or organs) a segmentation neural network ("specific neural network") 140b1-140b3 is trained, using for example the sigmoid activation function after the last convolutional layer.

$$S(x) = \frac{1}{1 + e^{(-x)}}$$

where x is the output value of the convolutional layer at a given 3D coordinate.

The fourth segmentation neural network 140b4 ("multi-structure neural network") (all structures are present in the input) is trained for example using the Softmax activation function after the last convolutional layer.

As known in the art, the Softmax activation layer is a function of a neural network used to normalize the output of the previous layer to a probability distribution. The Softmax activation layer is based on the Softmax function that generates an output vector $\sigma(\vec{z})_i$ from an input vector $z_i$ for which i varies between 1 and K (equal to the number of labels):

$$\sigma(\vec{z})_i = \frac{e^{z_i}}{\sum_{j=1}^{K} e^{z_j}}$$

Note that for the specific neural networks and the multi-structure neural network a training for each fold in the training dataset may be performed as described for example by reference to FIG. 6. Further, as described for example by reference to FIG. 6, for each specific neural network a student neural network may be trained during the training phase A1 and is used in replacement of the expert neural network during the inference phase A2.

Loss function for training phase A1

A loss function is determined for each segmentation neural networks and used to update the parameters of the concerned segmentation neural network. The loss function is based on a combination of metrics based on volume, position and distance measurements and adapted to the type of anatomical structure (bones, vessels or organs) to segment.

The loss functions parameters (alpha, beta, gamma, $L_{region}$, $L_{local}$, $L_{distance}$) used for backpropagation may be automatically adjusted based on the type of the considered anatomical structure (i.e. vessel, bone or organ) to segment and a learning rate scheduler with linear warm-up and cosine decay is used for all networks.

For the training of the segmentation neural network that is specific for vessels (thin structures) the following combined loss function may be used

$$L = \alpha L_{region} + \beta L_{local} + \gamma L_{distance}$$

where:

- $L_{region}$ is a first score (or first specific loss function) that measures an accuracy based on local and global information over a 3D volume in a reference segmented image and a current segmented image;
- $L_{local}$ is a second score (or second specific loss function) that measures local consistency between voxels in a reference segmented image and a current segmented image;
- $L_{distance}$ is a third score (or third specific loss function) that measures a distance between boundary points (i.e. contours) of a reference segmented image and a current segmented image.

All these scores may be computed patch-wise, in order to reduce memory usage, between the predicted output and the ground truth reference for each training images batch. The coefficients $\alpha$, $\beta$ and $\gamma$ may vary dynamically during the training phase A1 as a function of the training epoch ep as illustrated by Table 1 below.

By using these three types of score, the loss function considers three types of information: area (first score), voxels (second score) and distance (third score). Each score is weighted depending on the type of anatomical structure (bones, vessels or organs) to segment. Additionally, for each structure, weights are dynamically modified during the training phase A1 based on the current epoch (see Table 1 below). In this way the network can learn different information at different time of the training phase A1.

Table 1 below shows the weights used for the loss function depending of the type of anatomical structure and the training epoch.

| | $\alpha$ | $\beta$ | $\gamma$ |
|---|---|---|---|
| Bones | 1 | 1 | 0 |
| Organs (colon...) | 1 | 1 | 0 |
| Vessels | 1 | 1 | $\begin{cases} 0 & ep < 200 \\ \frac{ep-200}{50} & 200 \leq ep \leq 250 \\ 1. & 250 < ep \end{cases}$ |

According to Table 1, the third score is not used for bones nor organs but only for vessels and as a function of the training epoch ep. The dynamic adjustments of the third score as a function of the training epoch (ep) allows to increase the precision in the last part of training, since the loss function force the model to focus on the imperfection at the edges of the labels. This strategy has also the advantage of not impacting the training time since the distance based loss is used only for refinement purposes (a training using a distance-based function from the very first epoch will be instable since the boundaries of the predictions are, at the beginning, not well defined).

The first score $L_{region}$ is mostly used at the beginning of the training cycle and it maximizes the accuracy exploiting local and global information over a 3D volume. For the training of large structures (bones or organ) the first score $L_{region}$ is defined as the Soft Dice score. For the training of thin structures (vessels) the first score $L_{region}$ is defined as the Tversky score and the parameters $\alpha$ and $\beta$ may be set to 0.3 and 0.7 respectively. For the Soft Dice score Ds and the Tversky score Tv formulas: $\hat{y}_i$ is the probability of the predicted i-th voxel at the output of the neural network after the final activation layer, $y_i$ is the corresponding ground-truth value and N is the number of voxels in the patch and $\gamma$ is a constant used to avoid division by zero (for example $\gamma = 2.2. e^{-16}$).

One possible mathematical expression of these scores Ds and Tv is provided below.

$$\mathrm{Ds} = \frac{2 \cdot |Y \cap \hat{Y}|}{|Y| + |\hat{Y}|} = \frac{2 \cdot \sum_{i=1}^{N} y_i \hat{y}_i + \gamma}{\sum_{i=1}^{N} y_i + \sum_{i=1}^{N} \hat{y}_i + \gamma}$$

$$\mathrm{Tv} = \frac{|Y \cap \hat{Y}|}{|Y \cap \hat{Y}| + \alpha * |Y - \hat{Y}| + \beta * |\hat{Y} - Y|} =$$

$$= \frac{\sum_{i=1}^{N} y_i \hat{y}_i + \gamma}{\sum_{i=1}^{N} y_i \hat{y}_i + \alpha \sum_{i=1}^{N} \hat{y}_i (1 - y_i) + \beta \sum_{i=1}^{N} (1 - \hat{y}_i) y_i + \gamma}$$

The second score $L_{local}$ is the binary cross-entropy BCE. It allows to measure local consistency between voxels. The formula follows the same notation as the Dice and Tversky score. Using the same notations, the BCE may be defined as:

$$\mathrm{BCE} = -\frac{1}{N} \sum_{i=1}^{N} y_i \cdot \log \hat{y}_i + (1 - y_i) \cdot \log (1 - \hat{y}_i)$$

The third score $L_{distance}$ is the pairwise distance between contours of the target masks of a manually segmented anatomical structure and the current prediction performed by the segmentation neural network. This is effectively useful for very thin structures, where $L_{region}$ is not robust to small errors. $L_{distance}$ can be calculated using any distance measure (the Euclidean distance, the Hausdorff distance or the average distance). In practice, the average distance is more robust to local segmentation error, and may be computed using fast Chamfer algorithms. We may define the average distance as:

$$\mathrm{Ch}(\mathrm{S}_1, \mathrm{S}_2) = \Sigma_{x \in S_1} d(x, S_2) + \Sigma_{y \in S_2} d(y, S_1)$$

where $S_1$ and $S_2$ are respectively the set of voxels coordinates of the predicted output segmented image (x) and the ground-truth (y) and the distance from a point to a set is the minimum of the distance of this point to every point of the set.
Due to the high memory and computational costs of distance-based losses, their direct usage in the first phases of the training cycle is not feasible. Thus, the distance information may be used only at a more advanced stage. Additionally, to further reduce the computational burden, the computation of the pair-wise distance may be limited on the boundary points of the predictions. Boundary points are computed directly on GPU using a morphological erosion followed by a logical operator. The erosion is computed as a MinPool operation. For multi-class problems the Generalized Dice loss and the categorical loss entropy for the $L_{region}$ and the $L_{local}$ respectively are used.
The coefficients of the neural networks (including the coefficients of the convolution filters) are updated so as to minimize the loss function using an iterative process. Various known methods may be used for example a method based on a gradient descendant algorithm, for example Stochastic Gradient Descent. The initial values of the coefficients of the neural networks may be set using various strategies, for example using the He initialization strategy

<u>Learning Rate (LR)</u>

The learning rate is a hyperparameter that controls, at each backpropagation step, how much to change the weights of a neural network in response to the estimated error. Choosing the learning rate is challenging as a value too small may result in a long training process leading to underfitting, whereas a value too large may result in an unstable training process.
Different learning rate schedulers may be implemented. A learning rate scheduler is a method to dynamically adapt the learning rate value depending on the current training iteration. Scheduling the learning rate has some beneficial properties on the training cycle, notably reducing overfitting and increasing training stability. In particular, a learning rate system with an initial warmup, a plateau and a decay may be used. The warm-up increases the stability of the first epochs. Once the loss is stable, a fixed learning rate is used for a longer constant training. Finally, to fine-tune the neural network without incurring in over-fitting, the learning rate is decayed by a fixed ratio (e.g. 30% of the initial learning rate).
The following schedulers may be used:

- Linear Warm-Up Linear Decay no difference between warm-up and decay strategy.
- Linear Warm-Up Exponential Decay faster decay for reduced overfitting.

- Linear Warm-Up Cosine Annealing non-linear decay process, delaying the fall-off to later epochs. This smoother decay system is used for the training of vessels and colon, where it is showed to provide better accuracy results.

In one or more embodiments, $\lambda$ is defined as the base learning rate, $\alpha$ as the learning at the first batch and $\beta$ as the learning rate at the last batch. $\lambda = 4 \cdot e^{-4}$ may be used as the best overall learning rate for all structures. For the warm-up phase $\alpha = 0.6 \lambda$ may be used, reaching $\lambda$ at epoch = 20. For the decay phase $\beta = 0.6 \lambda$ may be used, finalizing the decay after epochs = 100.

Back to FIG. 2, at step 240, the four predicted segmented images 14c1-14c4 are aggregated (e.g. by the aggregation function 150a) to generate an aggregated segmented image 150b.

The aggregated segmented image 150b is generated (by the aggregation function 150a) by combining the four predicted segmented images 14c1-14c4 at the output of the specific neural networks and the multi-structure neural network.

The combination of the four segmented images 14c1-14c4 may be performed such that a voxel in the aggregated segmented image 150b is:

- the corresponding voxel of the fourth segmented image 14c4 generated by the multi-structure segmentation network if the corresponding voxels in the first, second, third segmented images are detected as representing distinct anatomic structures; in an alternate embodiment, when the corresponding voxels in the first, second, third segmented images represent distinct anatomic structures, a voxel in the aggregated image is the label corresponding to the anatomic structure among the distinct anatomic structures having the highest probability score, this probability score being computed based on a softmax output of the multi-structure segmentation network 140b4 and the specific segmentation networks 140b1-140b3 ax explained above for the training phase with respect to FIG. 1;
- the corresponding voxel of the first, second or third segmented image 14c1, 14c2 or 14c3 generated by one of the specific segmentation networks for which an anatomical structure has been detected at the corresponding voxel if only one anatomical structure has been detected in only one of the first, second and third segmented images at the corresponding voxels;
- the corresponding voxel of the preprocessed image 130d at the input of the segmentation sub-system 140 if no anatomical structure has been detected at the corresponding voxels in the first, second, third segmented images.

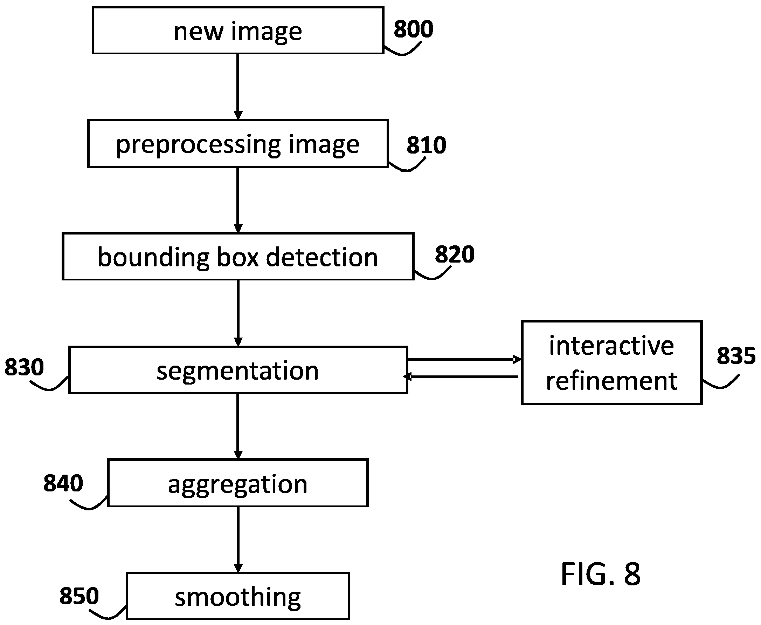

Once the machine learning algorithms are sufficiently trained (for example after 200 training epochs for single organ networks, 500 training epochs for multi-organ network or when results on the validation dataset improves less than 0.01%), the trained algorithms can be applied to newly acquired images for automatic and fast segmentation of images of new patients: see for example the method steps described by reference to FIG. 8. A computation segmentation time of about 30 seconds per image can be achieved.

At step 236, an automatic refinement process may be performed (e.g. by the refinement sub-system 160) for one or more predicted segmented images 14c1-14c4 at the output of the specific neural networks 140b1-140b3 and the multi-structure neural network 140b4. For each patch extracted by the patch extraction algorithm 141, one or more refinement cycles may be performed iteratively and at each refinement cycle, a new segmentation mask is created as well as a new interaction image.

During a refinement cycle, user inputs are simulated: for each training patch, a binary segmentation mask is computed using the output predicted segmented image 14c1-14c4 generated by the concerned neural network 140b1-140b4. The one or more false positive and / or one or more false negative voxels simulating the user inputs may be randomly selected and used to reduce or enlarge a binary segmentation mask.

One or more interactions maps are generated based on the false positive and / or false negative voxels. The interaction maps may be binary masks (or single channel images) of the same size as the input image patch. Two interactions maps may be created: one for the voxel(s) selected as false positives and one for the voxel(s) selected as false negatives. In each interaction map, a binarized sphere around each selected voxel may be generated: for example, a sphere of radius r= 3 voxels is centered around the concerned voxel. The binary segmentation mask and the two interaction maps may be combined to form a 3 channels 3D image (e.g. an RGB image) to form a 3 channels 3D interaction image.

This interaction image is then used as input to additional convolutional layers (referred to also as the refinement blocks) added to the concerned segmentation neural network (the specific neural network 140b1-140b3 or the multi-structure neural network 140b4) having generated the predicted segmented image 14c1-14c4.

The outputs of these refinement convolutional layers are then merged (e.g. the output images are added voxel by voxel such that corresponding voxels are added) with the input of the encoder blocks of the U-net architecture of the concerned segmentation neural network. FIG. 5 illustrates an example of an U-net architecture merged via the encoder blocks with additional convolutional layers used as refinement blocks and will be described in detail below.

As the loss function is computed based on the segmented image at the output of the neural network after correction by the false positive and / or false negative voxels generated during the refinement cycle(s) such that the backpropagation algorithm automatically takes into account the correction brought by the refinement cycles.

FIG. 4 show a block diagram of a bounding box detection sub-system for implementing a bounding box detection algorithm 130c. The system takes as input an RGB image 410 and it has the objective to give as output the minimal bounding box 470 containing the structure of interest. The bounding box detection sub-system may be based on a Faster R-CNN architecture as described herein. The architecture may be a 2D Faster R-CNN architecture using a ResNet-101 backbone model trained on the ImageNet [11] dataset.

According to the example illustrated by FIG. 4, this architecture includes: a feature extraction network 420, a region proposal network (RPN) 430 with a ROI (region of interest) pooling module 440, a detection network 450 and a 3D merging module 460.

The feature extraction network 420 is configured to extract and represents low levels information of the initial image using a series of convolutional layers. The feature extraction network 420 used may be a ResNet-101 model. All the parameters of the feature extraction network 420 may be computed using the available ImageNet [11] dataset as target. The RPN module generates region proposals, meaning that it selects regions of the image where there is a possibility of finding a foreground object extracted by the feature extraction network 420. These regions are subsequently evaluated as false positive or true positive. Since the proposal may be of variable size, not suited for the processing by a neural network, the ROI pooling module 440 extracts and adapts (e.g. using "max-pool" operators) the features extracted by the feature extraction network 420 with the coordinates given by the RPN module in order to obtain fixed size feature maps. The region proposal network 430 and the detection network 450 are specifically trained on the training dataset in order to localize the exact position of the bones from 2D RGB coronal MRI slices. In order to create the final 3D bounding box containing the bones a 3D merging module 460 is used to merge all the 2D bounding boxes predicted by the bounding box detection sub-system for the different MRI slices together to generate a 3D bounding box. During the merging operation we make sure that all the 2D predictions are contained in the 3D result.

The feature extraction network 420 may be implemented as a convolutional neural network and is configured to extract low level information about the image. The resulting feature map is used to generate a set of anchors (image regions of predefined size) which are exploited by the region proposal network 430 to get a list of possible regions containing the structure of interest. The proposed list of regions is given to the ROI pooling module 440, which produces a list of feature maps, all of the same size, at the position indicated by the regions. A MaxPool operator may be used by the ROI pooling module 440 in order to obtain fixed size feature maps. This fixed size feature maps are fed to a detection network 450, composed by fully connected layers, that gives as output a set of bounding boxes with associated a probability score that indicates if the object is actually contained in the bounding box. We take as final prediction the set of bounding boxes with a probability score higher than 95%. The selected bounding boxes are merged together in the three-dimensional space in 460. The output of the bounding box detection sub-system is the smaller 3D bounding box 470 containing all the 2D bounding boxes selected by the 3D merging algorithm 460.

For the region proposal network 430, we may use the binary cross entropy as classification loss (probability that an anchor contains foreground objects) and the mean absolute error for the regression loss (delta between anchors and ground truth boxes). The boxes are then classified into foreground and background using the categorical cross-entropy loss function.

FIG. 5 show a block diagram of an example convolutional neural network that may be used for the segmentation networks 140b (140b1, 140b2, 140b3, 140b4).

Each of the convolutional neural networks 140b used for segmentation may have a U-net architecture. FIG. 5 described below shows an example embodiment. These convolutional neural networks may have an encoder-decoder structure. The network is composed by an encoder composed by a series of convolutions / batch normalization / downsampling operators MP and a decoder formed by a series of convolutions / batch normalization / upsampling operations US.

As known in the art, the downsampling operation MP may be a max-pooling operation over a matrix divided into submatrices (that may have different sizes and be vectors or scalars) that extracts among each submatrix the maximum value to generate a downsampled matrix. After each max-pooling operator the size of the input is reduced in order to take into consideration details at different levels of resolution. After each upsampling operator US the size of the input is augmented in order to restore the initial level of resolution. All convolutions use 3-dimensional kernels. An activation layer (e.g. Softmax activation) is added to the last convolution of the whole network for the label prediction.

The base architecture is an encoder-decoder convolutional neural network (540). 510 is a patch extracted from the preprocessed image 130a. The encoder is composed by the blocks 540a, 540b, 540c and the decoder by the blocks 540e, 540f, 540g.

Each block 540a, 540b, 540c, 540e, 540f, 540g of the encoder-decoder is configured to perform a processing pipeline including a 3D convolution, an activation function (e.g. ReLu activation) and a normalization function (e.g. batch normalization). Each encoder block 540a, 540b, 540c at level n in the encoder receives as inputs the output of the previous block (level n+1) after the application of a downsampling operator MP (e.g. the MaxPool operator represented by the vertical arrows) and may receive as input the output of one of the refinement blocks 550a, 550b, 550c as represented by FIG. 5.

Each block of the decoder receives as input the concatenation between the output of the previous decoder block after the application of a upsampling operator US and the output of the encoder block at the respective level. For example, decoder block 540f receives as input the concatenation (by stacking the blocks outputs along the outermost dimension) between the output of the previous decoder 540e block after the application of an upsampling operator US and the output of the encoder block 540b at the corresponding level. The first encoder block 540a of the network receives as input the initial image 510 and may receive as input the output of the refinement block 550a. At the last layer, the output of the decoder block 540g is connected to an activation function AF (e.g. a Softmax operator) to produce the final segmented image 570 showing the segmented anatomical structures 570a, 570b, 570c, 570d.

The block 540d is defined as the bottleneck of the structure. The bottleneck block 540d is defined using the same configuration of convolutions of the previous encoder layers but starting from this point on the Max Pooling operators are replaced by the upsampling operator. The bottleneck block 540d receives as input the output of the last MaxPool operation MP. Like the other encoder blocks, the bottleneck block 540d is configured to perform a processing pipeline including a 3D convolution, an activation function (e.g. ReLu activation) and a normalization function (e.g. batch normalization). The output of the bottleneck block 540d is provided to the first decoder block 540e after the application of an upsampling operator US.

Pyramidal layers 520 and/or deep supervision 560 may be used.

For organs and bones segmentation, pyramidal layers 520 may be added at each level of the encoder (e.g. after every max-pool operation). The first convolution block 540b after the max-pool operator receives as input the concatenation between the result of the previous layer from block 540a and a downsampled version of the original image from block 520a.

For vessels segmentation a deep supervision block 560 may be used. We add to the decoder convolutions activation layers (e.g. Softmax activation). The loss function is then calculated as a weighted sum of the loss at the different levels of the decoder. Weights are higher for outermost levels corresponding to result produced by the blocks 540a and 540g.

As represented by FIG. 5, block 520 represents an optional pyramid input functional block including one or more pyramid blocks. Each pyramid block 520a, 520b and 520c performs a downsampling operation DS using for example a trilinear interpolation method. The first block 520a receives as input the original image 510. A downsampling operation DS may reduce by half the size of the image. The output of each pyramid block 520a, 520b, 520c is optionally concatenated to the output of the respective encoder block 540a, 540b, 540c of the base network 540 and provided as input to the next encoder block. For example, as represented by FIG. 5, encoder block 540b receives as input the output of pyramid block 520a and encoder block 540a and may also receive as input the output of the refinement block 550b. All inputs of an encoder block or decoder block are concatenated on the outermost dimension.

Block 560 is the deep supervision module including one or more operator blocks. Each of the operator blocks 560a, 560b, 560c applies an activation function AF (e.g. the Softmax operator) to the output of the respective decoder block 540f, 540e, 540d of 540. The loss function may be calculated based on a comparison between the output image of the outermost operator block 560a and a corresponding reference segmented image (i.e. the ground truth generated manually). The loss function may be optionally calculated as the weighted sum of the loss between each deep supervision block (560a, 560b, 560c) and the corresponding reference segmented image.

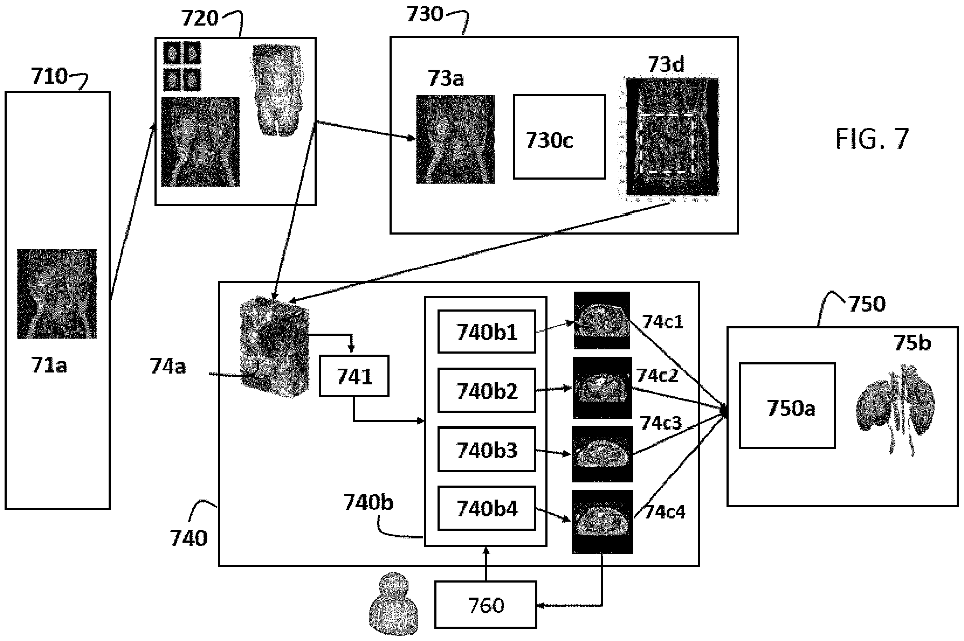

Blocks 550 and 530 is an example of a refinement sub-system (see FIGS. 1 and 7, refinement sub-systems 160, 760) including one or more refinement blocks 550a, 550b, 550c and an error detection module 530. An interaction image encoding erroneous voxels (they may be encoded as spheres) identified as false positive or false negative by a user during a user interactive refinement process (for example during step 835, see FIG. 8) or selected automatically by a random algorithm (for example during step 236, see FIG. 2) are provided by the error detection module 530 and fed to the series of refinement blocks 550a, 550b, 550c. As described herein with respect to FIG. 2 or 8, steps 236 and 835, the error detection module 530 may generate during a refinement step (using either user interaction or a random algorithm) an interaction image including 3 channels: a segmentation mask and the two binary interaction maps for the false positive voxels and the false negative voxels respectively.

Each refinement block 550a, 550b, 550c is configured to perform a processing pipeline including, like the encoder blocks, a 3D convolution, an activation function (e.g. ReLu activation, rectified linear Unit activation function) and a normalization function (e.g. batch normalization). Convolutions may be computed for example over blocks of 3 * 3 * 3 voxels and using a stride equal to 2, effectively reducing the size of the input in the process. The output of each refinement block is added to the output of the respective encoder blocks of 540. This mechanism allows to take into account the inputs of the user in the segmentation network 540.

Block 570 shows the final anatomical structure segmentation resulting from the last layer of the base network 540 after the application of the activation function (e.g. Softmax operator) to block 540g.

As will be described in detail with respect to FIG. 6, to reduce computational time and resources needed we distill the set of ensembles (teacher model) from an expert neural network to a student neural network (or student model). We feed to the student the patches, the labels and the ensemble predictions.

FIG. 6 show a block diagram of sub-system for ensemble learning and generation of a trained neural network that may be used for obtaining any of the trained segmentation networks 140b1-140b4.

Aggregating the predictions obtained by specific neural networks allows to reduce variance and improve results accuracy. In addition, for each type of anatomical structure, one specific neural network may be trained per fold and per type of anatomical structure and the predicted segmented images obtained by the specific neural networks are aggregated through averaging, thus creating one ensemble per type of anatomical structure and obtaining N ensembles (N=3, bones, vessels, organs).

Before aggregation, the predicted segmented images 14c1-14c3 of the output of the specific segmentation neural networks are compared to detect inconsistent voxels between these images and determine a segmentation uncertainty. In case of discordance for a given voxel (e.g. two different specific neural networks assigned the same voxel to two different labels) the label provided for this given voxel by the multi-structure neural network is used to estimate segmentation uncertainty via the maximum Softmax probability $\mu$.

$$\mu = \max \sigma\left(\vec{z}\right)_i$$

Where $\sigma$ is the Softmax function, z is the prediction vector and i is the index of the components of vector z.

An uncertainty criterion may be used to establish the final labels of the voxels in which two or more voxels discords. The class label i with less uncertainty or highest probably score is assigned to the voxel. As explained above for the training phase, when the corresponding voxels in the first, second, third segmented images represent distinct anatomic structures, a voxel in the aggregated image is the label corresponding to the anatomic structure among the distinct anatomic structures having the highest probability score, this probability score being computed based on a voxel-wise softmax output of the multi-structure segmentation network 740b4 and the specific segmentation networks 740b1-740b3.

As illustrated by FIG. 6, each image of the training dataset, in the form of patches (610), and for each type of anatomical structure network (bones, vessels, organs), the block 620 computes an output of an expert model (i.e. neural network) 620 as the mean of the output of the trained models (i.e. neural networks) obtained for the folds 620a-620e (one trained model is obtained for each fold and a single expert model is obtained from the trained models obtained for all the folds). The result is computed as the average of the last layer of the trained models, corresponding to the sigmoid activation function.

In order to reduce computational burden, we distill the knowledge of these trained models to a student model (630). The student model 630 has the same architecture of the expert model 620 but instead of being trained on the ground-truth labels, it is trained on the initial raw images and ensemble predictions provided by the output of block 620. The final segmentation result (640) for each new anatomical structure to be segmented is then predicted solely by this trained student network as obtained at the end of the training phase A1.

For this training, a two terms loss function may be used. The first term (structural loss) is computed as the soft dice score between the predicted output of the student model and the ground truth (as the mean of the output of the trained models obtained for the different folds). The second term (distillation loss) is computed as the Kullback-Leibler divergence between the output of the innermost convolutional layers. We propose to use this final distilled model for a fully automatic semantic segmentation of OARs.

For each type of anatomical structure (bones, vessels, organs) a specific student neural network is trained to generate the trained segmentation networks 740b1-740b3 and all these trained neural networks 740b1-740b3 (see the description of Fig. 7 concerning the bones specific neural network, organs specific neural network and vessels specific neural network) are used during inference phase A2 for each new image to be segmented to generate 3 segmented images 74c1, 74c2, 74c3 (instead of using the more complex corresponding expert neural network obtained for this type of anatomical structure, as described by reference to FIG. 6). Likewise, the multi-structure neural network 140b4 described herein may be trained in the same manner and used during inference phase A2 to generate the fourth segmented image 74c4..

FIG. 7 shows a block diagram of a trained image segmentation system 700 (hereafter the trained system) configured to perform segmentation of medical images using trained supervised machine learning algorithms. The training of the supervised machine learning algorithms may be performed as described herein. The training of the supervised machine learning algorithms may be performed as described for example by reference to FIGS. 1 and 2.

The training system 700 allows an accurate computer-assisted 3D modeling of the major organs at risks from pre-operative MRI images of children, even having tumors and malformations. The system automatically adapts functions and parameters based on the structure of interest. The system enables the creation of patient-specific 3D models in a matter of minutes, greatly reducing the amount user interactions needed. The 3D models can be exported for visualization, interaction and 3D printing.

The trained system 700 may include one or more sub-systems: a preprocessing sub-system 720, a bounding box detection sub-system 730, a segmentation sub-system 740, an aggregation sub-system 750 and a refinement sub-system 760.

The preprocessing sub-system 720 may be identical to the preprocessing system 120 described for example by reference to FIGS. 1-2. The preprocessing sub-system 720 is configured to generate a preprocessed image 73a from an input image 71a.

The bounding box detection sub-system 730 may implement a bounding box detection algorithm 730c corresponding to the trained bounding box detection algorithm 130c described for example by reference to FIGS. 1, 2 and 4 as obtained at the end of the training phase A1. The bounding box detection sub-system 730 is configured to generate a bounding box 73d from a preprocessed image 73a. The bounding box detection subsystem 730 is configured to generate a reduced preprocessed image 74a from a preprocessed image 73a generated by the preprocessing sub-system 720 and a corresponding bounding box 73d.

The segmentation sub-system 740 may implement a segmentation algorithm 740b corresponding to the trained segmentation algorithm 140b described for example by reference to FIGS. 1, 2, 5 and 6 as obtained at the end of the training phase A1. Each of the segmentation networks 140b1, 140b2, 140b3, 140b4 obtained after the training phase A1 corresponds to a respective trained neural network 740b1, 740b2, 740b3 or 740b4 of the segmentation sub-system 740.

The segmentation sub-system 740 is configured to receive a reduced preprocessed image 74a generated from a preprocessed image 73a and a corresponding bounding box 73d. The segmentation sub-system 140 may apply a patch extraction algorithm 741 to each reduced preprocessed image 74a received as input to extract one or more patches. The extracted patches are fed to the specific segmentation neural networks 740b1-740b3 and the multi-structure segmentation neural network 740b4.

The aggregation sub-system 750 includes an aggregation function 750a. Like the aggregation function 150a described for example by reference to FIGS. 1 and 2, the aggregation function 750a is configured to generate an aggregated segmented image 75b from the four segmented images 74c1-74c4 obtained at the output of the specific segmentation neural networks 740b1-740b3 and multi-structure segmentation neural network 740b4.

The refinement sub-system 760 may be identical to the refinement sub-system 160 described for example by reference to FIGS. 1, 2 and 5 except that true user inputs are used to identify false positive voxels and / or false negative voxels instead of a random algorithm. The refinement sub-system 760 is configured to receive as input a segmented image 74c1-74c4 and to generate an interaction map fed to one or more additional convolution layers of one or more concerned neural networks 740b1-740b4.

FIG. 8 shows a general flow chart of a method for generating segmented images according to one or more example embodiments.

At step 800, an input image 71a is obtained. The input image 71a may be a raw image as acquired for example by an MRI system.

At step 810, a preprocessing is performed by the preprocessing sub-system 720. The input image 71a is preprocessed (e.g. by the preprocessing sub-system 720) to generate a preprocessed image 73a. The preprocessing operations may be identical to the preprocessing operations described for step 210.

At step 820, a bounding box detection is performed by the bounding box detection sub-system. The preprocessed image 73a is provided as input image to the trained bounding box detection algorithm 730c to detect a bounding box 73d corresponding to a region of interest used as 3D search space and to generate a reduced preprocessed image 74a.

At step 830, the reduced preprocessed image 74a is segmented using the segmentation sub-system 740. The reduced preprocessed image 74a is first provided as input to the patch extraction algorithm 741 and the extracted patches are then provided to the four trained segmentation neural networks obtained at step 830. For each reduced preprocessed image 74a, four segmented images 74c1 to 74c4 are obtained:

- a first segmented image 74c1 showing one or more detected bones is generated by the bones segmentation neural network 740b1;
- a second segmented image 74c2 showing one or more detected vessels is generated by the vessels segmentation neural network 740b2;
- a third segmented image 74c3 showing one or more detected organs is generated by the organs segmentation neural network 740b3;
- a fourth segmented image 74c4 showing one or more detected anatomical structures (including vessels, bones or organs) is generated by the multi-structure segmentation neural network 740b4.

At step 840, an aggregated segmented image 75b is generated (e.g. by the aggregation function 750a) by combining the four segmented images 74c1 to 74c4 obtained at step 823. The combination of the four segmented images 74c1 to 74c4 is performed such that a voxel in the aggregated segmented image 75b is:

- the corresponding voxel of the fourth segmented image 74c4 generated by the multi-structure neural network 740b4 if the corresponding voxels in the first, second, third segmented images are detected as representing distinct anatomic structures; alternatively, when the corresponding voxels in the first, second, third segmented images represent distinct anatomic structures, a voxel in the aggregated image is the label corresponding to the anatomic structure among the distinct anatomic structures having the highest probability score, this probability score being computed based on a voxel-wise softmax output of the multi-structure segmentation network 740b4 and the specific segmentation networks 740b1-740b3
- the corresponding voxel of the first, second or third segmented image 74c1, 74c2 or 74c3 generated by one of the specific neural networks 740b1-740b3 for which an anatomical structure has been detected at the corresponding voxel if only one anatomical structure has been detected in only one of the first, second and third segmented images at the corresponding voxels;
- the corresponding voxel of the preprocessed image 73d at the input of the segmentation subsystem 740 if no anatomical structure has been detected at the corresponding voxels in the first, second, third segmented images.

At step 850 the final corrected 3D representation 75b may be refined via smoothing using a Laplacian operator (for example with lambda = 10 where lambda is the amount of displacement of vertices along the curvature flow, a higher lambda corresponds to a stronger smoothing) and exported for clinical usage.

At step 835, an optional interactive refinement process may be performed by the refinement sub-system 760 on one or more of the segmented images 74c1 to 74c4 obtained at step 830 . While mostly correct, the results issued from the automatic segmentation methods may still be locally incorrect, reducing their clinical potential. For each patch extracted by the patch extraction algorithm 741, one or more refinement cycles may be performed iteratively and at each refinement cycle, a new segmentation mask is created as well as a new interaction image.

During the interactive refinement process, a binary segmentation mask of the concerned segmented image 74c1-74c4 obtained at the output of a specific neural networks 740b1-740b3 or the multi-structure neural network 740b4 is automatically computed. In addition, the concerned segmented image 74c1 to 74c4 obtained at step 830 is displayed (for example with the input image 71a) and a user interface is provided to allow a user to select one or more erroneous voxels encoded as a false positive or respectively false negative. A corrected segmented image 76a is generated from the concerned segmented image 74c1-74c4 by correcting the selected erroneous voxel(s) on the basis of the identification of the anatomical structures provided for the erroneous voxels by the user.

Step 835 may be repeated iteratively to allow the user to iteratively correct more voxels and generate second, third, etc., corrected segmented images. At the end of the refinement process, a final corrected segmented image 76a is obtained.

The final corrected segmented image is used to refine the concerned segmentation neural network(s): e.g. at least the specific segmentation neural network having generated the erroneous voxel. For example, if the erroneous voxel is part of a bone and a vessel has been detected instead, both the bones segmentation neural network and the vessels segmentation neural network may need to be refined. For example, if the erroneous voxel is part of a bone and another bone has been detected, only the bones segmentation neural network needs to be refined. In all cases, the multi-structure segmentation neural network may also be refined.

As already described herein, interactions maps are generated from the erroneous voxels. The interaction maps may be binary masks of the same size as the input image patch. Two interactions maps may be created, one for the voxel(s) selected as false positives and one for the voxel(s) selected as false negatives. In each interaction map, a binarized sphere around each selected voxel may be generated: for example a sphere of radius r= 3 voxels is centered around the concerned voxel. The binary segmentation mask and the two interaction maps may be combined to form a 3 channels 3D image (e.g. an RGB image) used as interaction image.

The interaction image is used to refine the concerned segmentation neural network(s), e.g. at least the specific segmentation neural network having generated the erroneous voxel. This interaction image is fed to additional convolutional layers whose output are merged respectively with inputs of corresponding encoder blocks of the one or more concerned segmentation networks 740b1-740b4 as explained also by reference to FIG. 5.

One or more additional convolutional layers (see the refinement blocks 550a, 550b, 550c of Fig. 5) may be added to the base segmentation architecture of the specific segmentation neural networks to be refined in order to process the interaction image and generate outputs to feed the corresponding encoder blocks of the U-Net architecture. The additional convolutional layers are stacked together in order to form a parallel branch to the encoder of the UNet as illustrated by Fig. 5. For each refinement block, the 3D convolution is followed by a linear activation unit and a batch normalization. The resulting outputs of the refinement blocks are added to the respective outputs of the base convolutions, just before the MaxPool operations from the previous encoder block.

During the training phase A1, the learning rate of these additional convolutional layers may be set to be higher (e.g. 10 times, 3 times, 5 times higher) than the learning rate of the base layers (encoder and decoder blocks) such that the output of the refinement blocks have more weight in the learning stage.

The interaction image is provided as input training data to these one or more additional convolutional layers of the concerned segmentation neural network. A specific loss function may be used during the inference phase A2 for training the additional convolution layers for updating the coefficients of the refinement blocks (see FIG. 5, blocks 550a-550c), e.g. in order to force the network output to be coherent with the user annotations (e.g. output voxels labels must belong to the same class the user indicates). This loss function may be defined as:

$$\mathcal{L}_{interactive} = \alpha \cdot \mathcal{L}_{region} + \beta \cdot \mathcal{L}_{coherence}$$

$$\mathcal{L}_{coherence} = \theta \cdot \frac{\sum_i^{N_p} \|1 - \hat{y}_i\|_2^2}{N_p} + \phi \cdot \frac{\sum_j^{N_n} \|\hat{y}_j\|_2^2}{N_n}$$

where $L_{region}$ is the same loss function used in the previously described for the full-supervised training; $N_p$ is the total number of voxels selected as false positive; $\hat{y}_i$ is the value of the voxel in the output segmented image at the position of the $i^{th}$ positive click; $N_n$ is the total number of voxels selected as false negative; $\hat{y}_j$ is the value of the voxel in the output segmented image at the position of the $j^{th}$ negative click; $\alpha$, $\beta$, $\theta$ and $\phi$ are weights that may be set respectively to 0.7, 0.3, 0.7 and 0.3.

Steps 810 to 840 may be repeated for each new input image. When the additional convolutional layers have been sufficiently trained, step 835 needs not to be executed and the output segmented image 750a generated at the end of step 830 may be automatically corrected using the trained additional convolutional layers (trained refinement blocks) in order to reduce or avoid the time that is necessary for a user to correct at step 835 the erroneous voxels of the output segmented image from the four segmented images obtained at step 830. Therefore, during step 830, the additional convolutional layers are used for automatically correcting the output segmented image obtained at step 830 and generate corrected output segmented images.

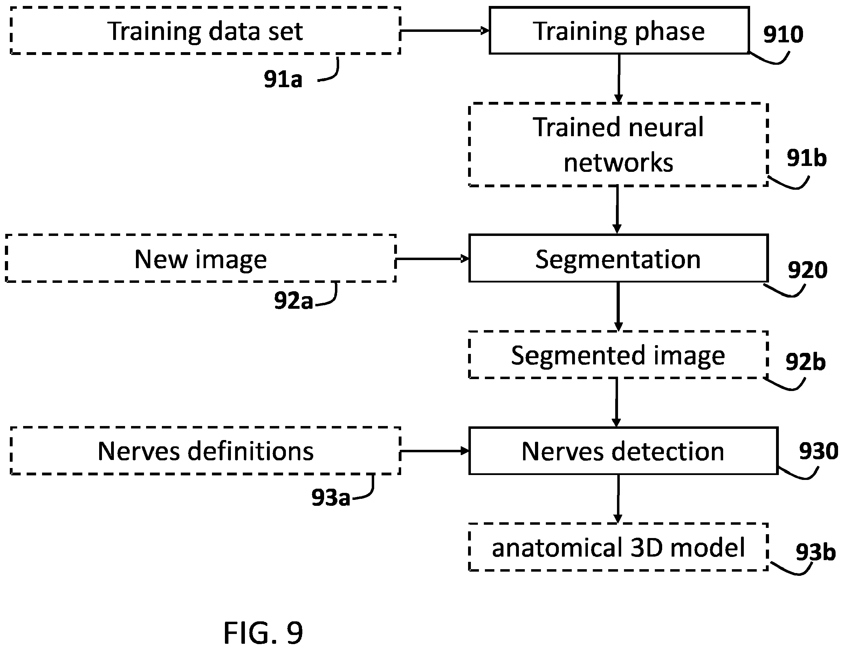

FIG. 9 show a flow chart of a method for generating a 3D anatomical model.

At step 910, a training phase A1 is performed using a training dataset 91a to generate trained neural network 91b. This training phase A1 may include one or more or all steps of a method for training supervised machine learning algorithms described for example by reference to FIG. 2.

At step 920, an inference phase A2 is performed using one or more new images 92a to generate corresponding segmented images 92b representing vessels, organ and bones. This inference phase A2 may include one or more or all steps of a method for generating segmented images described for example by reference to FIG. 8. The interactive refinement process is part of this inference phase A2.

At step 930, a nerves detection phase B is performed using nerves definitions 93a and the segmented images 92b to generate 23 anatomical models includes nerves, vessels, organ and bones. This nerves detection phase B will be described in detail below.

Nerves detection and modeling

The proposed method combines segmentation of anatomical structures from MRI and/or CT imaging and diffusion MRI image processing for nerve fiber reconstruction by exploiting their spatial properties. Tractography algorithms (deterministic tracking) are applied to diffusion images without constraints on fiber start/end conditions. Due to the huge number of false positives encountered in whole body tractograms, a filtering algorithm that exploits the spatial relationships between nerve bundles and segmented anatomical structures is used.

Due to resolution, noise and artifacts present in diffusion images acquired in clinical environments, it is often challenging to obtain complete and accurate tractograms. Instead of using the traditional ROI-based approaches, the analysis of whole-body tractograms is used. Seed points are positioned in each voxel of the image, regardless of their anatomical meaning. Alternatively they may be positioned randomly within a mask. All the irrelevant streamlines are then removed with a selected segmentation algorithm. We extend this approach in order to extract a complete pelvic tractogram from a multitude of streamlines. The final result is the visualization of smaller bundles (e.g. S4 sacral root) usually impossible to obtain using ROI-based tractography. Whole-pelvis tractograms are computed using the following parameters: DTI deterministic algorithm with termination condition: Fractional Anisotropy (FA) < 0.05; seed condition: FA > 0.10; minimum fiber length: 20 mm; maximum fiber length: 500 mm.

An approach based on simple relationships between organ boxes is not sufficiently accurate given the complexity of pelvic structures. The recognition of each nerve bundle is here based on natural language descriptions defining spatial information including: direction information (left, right, anterior, posterior, superior, inferior) and/or path information (proximity, between) and/or connectivity information (crossing, endpoint in). For example, a nerve may be described as *"passing through the S4 sacral foramen and crossing the sacral canal"*. Similar descriptions can be developed for all relevant nerve bundles. Translating these natural language descriptions into operational algorithms requires modeling each spatial relationship by an anatomical fuzzy 3D area that expresses the direction, pathing and connectivity information of the nerve definition.

The nerve detection relies on segmented images, for example obtained as described herein or using another segmentation method, fuzzy definitions of spatial relationships of nerves with respect to the segmented anatomical structures (bones, vessels and/or organs) and representation of fibers (e.g. by tractograms) in the anatomical region of interest.

The nerves detection logic is based on spatial relationships with respect to known anatomical structures. For each nerve, a query is generated from the nerve definition in natural language. A query may be seen as a combination, (e.g. using Boolean and/or logical operators) of spatial relationships. To determine whether a fiber satisfies a nerve definition, the query is converted to a fuzzy 3D anatomical area representing a search space for searching fibers.

For example, a nerve definition may be *"anterior with respect to the colon and not posterior with respect to the piriformis muscle or between the artery and the vein"* and indicates that the nerve is anterior to the colon, but not posterior to the Piriformis muscle or may be located between a given artery and vein.

Each spatial relationships used in the nerve definitions is transformed from human-readable keywords (e.g. "lateral of", "anterior of", "posterior of", etc.) to a 3D fuzzy structuring element depending on geometrical parameters. The geometrical parameters may include for example one or several angles ($\alpha 1$ and $\alpha 2$). Other types of spatial relations may be modeled in a similar way.

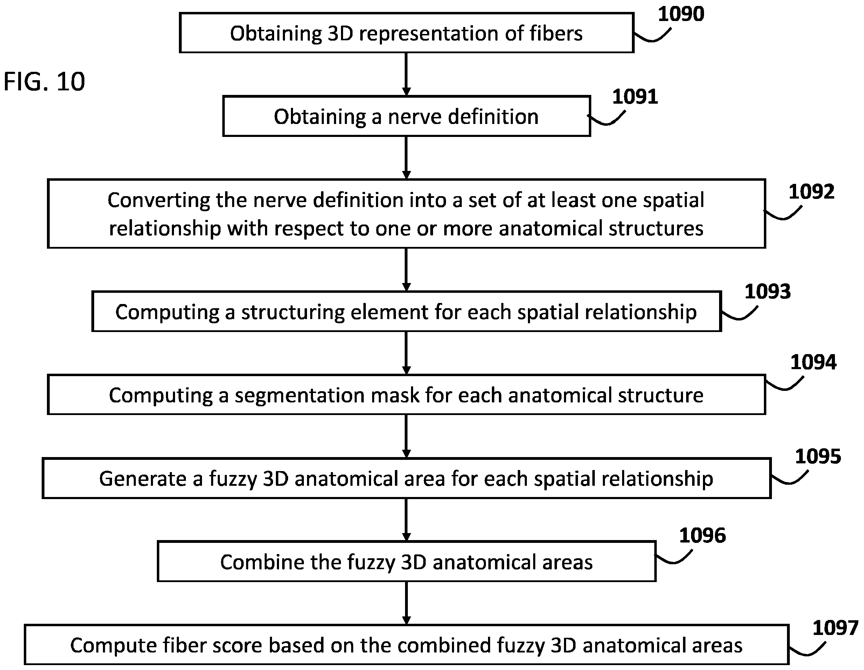

FIG. 10 shows a flowchart of a method for nerve detection according to one or more example embodiments. The steps of the method may be implemented by an apparatus comprising means for performing one or more or all steps of the method.

While the steps are described in a sequential manner, the man skilled in the art will appreciate that some steps may be omitted, combined, performed in different order and / or in parallel.

The method allows to detect, in one or more input image(s), at least one fiber representing a nerve on the basis of one or more segmented images including anatomical structures and nerve definitions.

At step 1090, one or more input image(s) are processed to obtain 3D representation of fibers present in the input image(s).

At step 1091, a nerve definition is obtained for a given nerve. A definition of a nerve expresses, e.g. in natural language, one or more spatial relationships between the nerve and one or more corresponding anatomical structures.

At step 1092, the nerve definition is converted into a set of at least one spatial relationship expressed with respect to one or more anatomical structures.

At step 1093, each spatial relationship with respect to an anatomical structure of the nerve definition is converted to a 3D fuzzy structuring element. This 3D fuzzy structuring element is used as structuring element in morphological dilations. In this 3D fuzzy structuring element, the value of a voxel represents the degree to which the relationship to the origin of space is satisfied for the concerned voxel. The value of a voxel in the dilation of the anatomical structure with this structuring element then represents the degree to which the relationship to the anatomical structure is satisfied at the concerned voxel.

A 3D fuzzy structuring element encodes at least one of: a direction information, path information and connectivity information of the concerned spatial relationship of the nerve definition. For example, a direction information of a spatial relationship to a given structure may be modeled as a fuzzy cone originating from that structure and oriented in the desired direction, and a fiber that is in that fuzzy cone satisfies the directional relationship to the structure.

At step 1094, a segmentation mask is computed for each anatomical structure used in the nerve definition. The segmentation mask may be a binary segmentation mask. The segmentation mask is computed from at least one segmented image including the concerned anatomical structure.

At step 1095, a fuzzy 3D anatomical area is generated for each spatial relationship expressed in the nerve definition with respect to an anatomical structure. A fuzzy 3D anatomical area is obtained for a spatial relationship by fuzzy dilation of the segmentation mask of the concerned anatomical structure based on the structuring element expressing concerned the spatial relationship. A fuzzy anatomical 3D area defines a dilation score for each voxel in the fuzzy anatomical 3D area.

More precisely, each considered spatial relationship S to an anatomical structure, a segmentation mask R of the concerned anatomical structure is extracted from the segmented image and this segmentation mask is dilated using the 3D fuzzy structuring element $\mu_s$ modeling the spatial relationship. The 3D fuzzy structuring element $\mu_s$ may be defined by a mathematical function (e.g. using one or more geometrical parameters) that gives a score to a voxel. The result of the fuzzy dilation is $D(R, \mu_s)$, where D denotes the fuzzy dilation and the value $D(R, \mu_s)(P)$ represents the degree $\sigma_s(P)$ to which the voxel P satisfies the relationship S with respect to the anatomical structure R. This degree is used as dilation score for the voxel P.

The fuzzy dilation of an object R with a fuzzy 3D structuring element $\mu_s$ may for example be defined, at each voxel P, as D(R, $\mu_s$)(P) = sup{$\mu_s$(P-P'), P'$\in$R}, where $\mu_s$(P-P') is the value at voxel P' of $\mu_s$ translated at voxel P. Any other fuzzy dilation function or algorithm may be used.

A spatial relationship with respect to an anatomical structure is thus defined by a 3D fuzzy anatomical area obtained from a structuring element defined based on geometrical parameters.

At step 1096, if several fuzzy 3D anatomical areas are obtained in step 1095, the fuzzy 3D anatomical areas are combined. The fuzzy anatomical 3D areas may be combined by computing as a voxel-wise combination of the one or more fuzzy anatomical 3D areas obtained at step 1095. The combined fuzzy 3D anatomical area obtained at this step defines a search space for the concerned nerve in an input image.

For example, when a combination of spatial relationships is used in the definition of a nerve, a combined score is computed based on the dilation scores $\sigma_{S1}$(P), $\sigma_{S2}$(P), etc, obtained at voxel P for the fuzzy anatomical 3D areas expressing the spatial relationships S1, S2, etc, used in the definition.

The Boolean functions used to compute the combined score depends how the spatial relationships S1, S2, etc, are combined in the nerve definition. This also defines how the fuzzy anatomical 3D areas are combined.

For example, a logical combination of fuzzy anatomical 3D areas may include several 3D areas combined with the logical operator "AND": in this case the nerve may be located in all of these 3D areas. A logical combinations of fuzzy anatomical 3D areas may include several 3D areas combined with the logical operator "OR": in this case the nerve has to be located in at least one of the 3D areas. A logical combinations of fuzzy anatomical 3D areas A1 and A2 may include several 3D areas combined with the logical operator "AND NOT": e.g. "A1 AND NOT A2" in this case the nerve has to be located in A1 but not in A2. Any other complex definition may be used with any logical operator and any number of fuzzy anatomical 3D areas.

The dilation scores obtained for the fuzzy anatomical 3D areas expressing the spatial relationships are combined in a corresponding manner.

For example, when two relationships are combined by the "AND" Boolean operator, i.e. "S1 AND S2", the combined score at voxel P is computed as the voxel-wise minimum MIN($\sigma_{S1}$(P), $\sigma_{S2}$(P)) of the dilation scores $\sigma_{S1}$(P), $\sigma_{S2}$(P) at voxel P.

For example, when two relationships are combined by the "OR" Boolean operator, i.e. "S1 OR S2", the combined score at voxel P is computed as the voxel-wise maximum MAX($\sigma_{S1}$(P), $\sigma_{S2}$(P)) of the dilation scores $\sigma_{S1}$(P), $\sigma_{S2}$(P) at voxel P.

For example, if a nerve cannot lay in a given anatomical area (spatial relationships NOT(S0)), then the degree $\sigma_{S0}$(P) will be close to zero in the given anatomical area.

At step 1097, for each fiber in an input image, a fiber score is computed based on the fuzzy 3D anatomical area representing the search space (either a single fuzzy 3D anatomical area obtained at step 1095 or a combined fuzzy 3D anatomical area obtained at step 1096). A fiber score may be computed for a fiber as the sum of dilation scores of voxels representing the concerned fiber that fall in the at least one fuzzy 3D anatomical area.

One or more detection criteria may be applied among those listed below. A detection criterion may be based on the fiber score.

For example, according to a first detection criterion, a detected nerve corresponds to a set of one or more fibers that is fully or partly within the fuzzy anatomical 3D area.

For example, according to a second detection criterion, a percentage of points of the fiber lying inside this fuzzy anatomical 3D area is computed for a given fiber and the percentage is compared to a threshold to decide whether the fiber corresponds or not to the search nerve.

For example, according to a third detection criterion based on the fiber score, a detected nerve corresponds to a set of one or more fibers having a fiber score higher than a threshold.

By default, the nerve detection method may keep all the fibers that have at least one point in the fuzzy anatomical 3D area.

Further details, examples and explanations are provided below concerning the method for nerve detection.

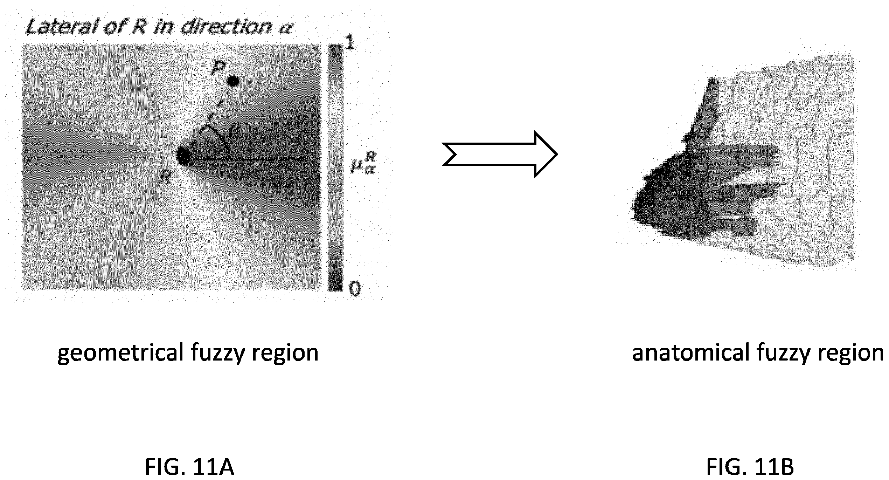

FIG. 11A shows an example of a fuzzy dilation of a reference anatomical structure R by a 3D fuzzy structuring element (here a 3D fuzzy cone) modeling the relationship "lateral of R in direction $\alpha$" (the direction vector is $\overrightarrow{ua}$). In this example, the degree to which a voxel P is in direction $\alpha$ with respect to R, depends on the cone angle $\beta$ at the top of the cone. The voxel in direction vector has the highest score and the score may decrease when the voxel moves away from the top of the cone or away from the direction vector. The degree is represented on a scale between a minimum value (here 0) and a maximum value (here 1). For example $\beta$(P) is the angle between the direction vector and the segment joining R and P. For example $\mu_S$ is computed as:

$$\mu_S(P) = \max\left(0, 1 - \frac{2 * \beta(P)}{\pi}\right)$$

Since the score of a directional relationship assumes a conic symmetry along the direction axes, choosing the cone angle β is equal to choosing the strictness of the relation. A bounding box may thus be represented by a cone with an angle equal to π. The user can change the strictness of a relation specifying another cone angle. The visibility angle may be normalized for intuitiveness between 0 and 1, with 1 indicating a π aperture and 0 indicating a straight projection.

FIG. 11B shows a corresponding dilated fuzzy 3D anatomical area obtained by applying such a 3D fuzzy structuring element to an anatomical structure.

Another example of spatial relationship is « in proximity of R ». In this case we can express $\mu_s$ as a distance with respect to an origin O. The Euclidean distance ED may be used as distance: $ED(O,P) = \|P - O\|_2$. Then $\mu_s$ can be defined as a decreasing function of the distance of a voxel P to the origin O. The anatomical structure R is then dilated by $\mu_s$ to define the fuzzy 3D anatomical area corresponding to the relationship "in proximity of R". A threshold on the distance may be applied. Proximity may be converted from voxel space to millimeters for interpretability reasons, allowing also to consider anisotropic voxel sizes.

For a "between" relationship, the fuzzy 3D anatomical area is delimited by two anatomical structures. The direction vector may be computed as the vector connecting the structures barycenter. In case of a 3D anatomical area including multiple disjoint areas, the 3D anatomical area computation is performed for each pair of connected anatomical structures.

The "connectivity" may be is modeled using the definitions "crossing" and "endpoints in" in order to specify the regions of the image traversed by the fiber and regions of the image linked by the fibers.

The complete list of natural language relationships may be represented as an abstract syntax tree, which may be reduced in hierarchical order to finally compute the fuzzy 3D anatomical area satisfying the combination of relations.

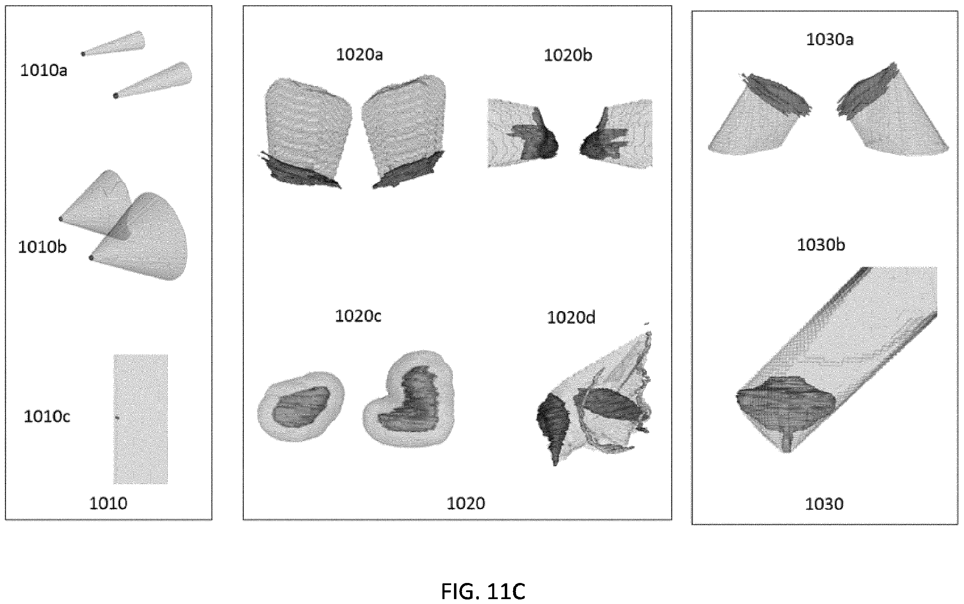

FIG. 11C illustrates examples of spatial definitions of a nerve.

Elements 1010 in FIG. 11C represent various 3D geometrical areas 1010a, 1010b, 1010c that may be used as a directional relationship definition with respect to a simple point with variable strictness. The 3D area 1010a includes two cones (angles α1 and α2) with small aperture, each defined from an origin point P1, respectively P2. The 3D area 1010b includes two cones (angles α1 and α2) with large aperture, each defined from an origin point P3, respectively P4. The 3D zone 1010c is a 3D parallelepiped defined from an origin point P5 (i.e. a bounding box with an aperture equal to π). The cones 1010a have an aperture value of 0.125. The cones 1010b have an aperture value of 0.5. The parallelepiped 1010c has an aperture value of 1.

Elements 1020 represent different types of spatial relationships with respect to anatomical structures obtained by automatic segmentation of MRI images. 1020a represents the definition anterior of coccygeal muscle. 1020b represents the definition lateral of obturator muscle. 1020c represents the definition proximity of ovaries. 1020d represents the definition between piriformis muscles and ureters.

Element 1030 represents examples of logical combinations of multiple spatial relationships, each defining a 3D fuzzy area to form a definition of complex 3D fuzzy areas defined by several 3D fuzzy areas. A logical combination of 3D fuzzy areas defines a search space by a logical combination of 3D fuzzy areas in which a nerve may be located and/or must not be located. 1030a represents the definition posterolateral of coccygeal muscle. 1030b represents the definition latero-superior of bladder. These complex areas allow to define more precisely the possible locations of a nerve while excluding some impossible locations.

Element 1040 represents examples of connectivity definition. 1040a represents the "crossing" definition with respect to anatomical areas. Fibers not having any points lying inside the highlighted regions are discarded and thus indicated using arrows. 1040b represents the "endpoints in" definition with respect to anatomical areas. Fibers not having an extreme point (the first or last point of the fiber) lying inside the highlighted regions are discarded and thus indicated using arrows.

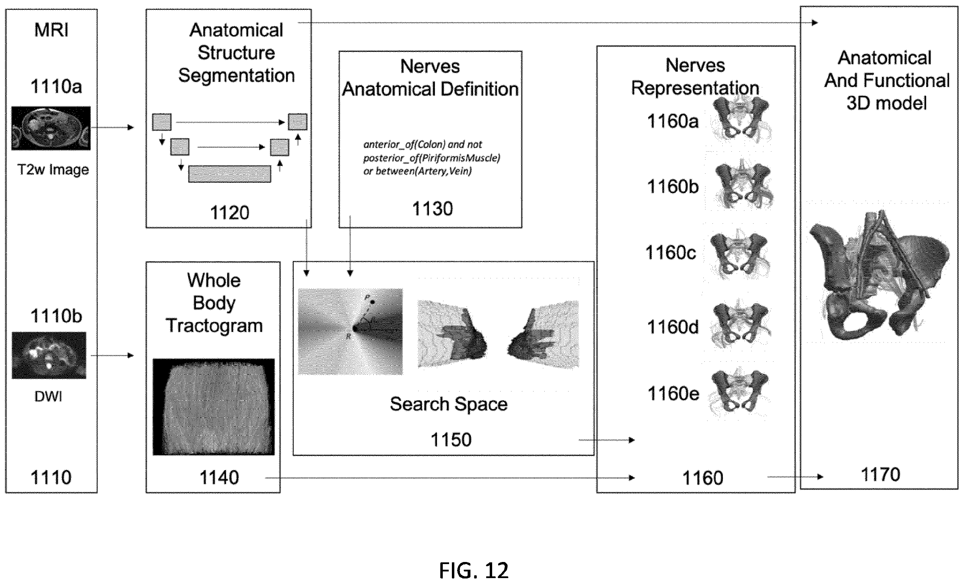

FIG. 12 illustrates aspects of a method for nerves recognition according to an example. T2w MRI images 1110a are given as input to a convolutional neural network 1120 for segmentation, for example obtained as described herein or using another segmentation method. For each nerve to be detected an anatomical definition 1130 is generated using natural language: the anatomical definition includes a definition of a possible location of a nerve and consequently allow the determination one or more 3D fuzzy anatomical areas defining a 3D search space corresponding to the spatial definition with respect to the nerve. A list of anatomical spatial relationships is generated for every nerve of interest using a natural language and logical operators (1130).

Anatomical spatial relationships 1130 of the nerves are given in natural language with respect to segmented anatomical structures 1120. A 3D fuzzy anatomical area 1150 to be searched (3D search space) is then determined using the anatomical definitions and the corresponding geometrical definitions of a structuring element based on mathematical functions. A combined 3D fuzzy anatomical area is determined based on the logical combination of the spatial relationships of the nerve definition. The combined 3D fuzzy anatomical area may be computed as the voxel-wise combination of the dilation scores at voxel P in the fuzzy anatomical 3D areas expressing respectively these spatial relationships.

The diffusion images 1110b are used to generate a whole body tractogram 1140 using for example a DTI deterministic tractography algorithm as disclosed in [10]. Fibers of the whole body tractogram 1140 lying partly or completely inside one of the defined 3D search spaces 1150 are detected as corresponding to one of the searched nerves 1160a-1160e. This allows to create a precise nerves-based representation of the peripheral nervous network (1160). The detected nerves are added to the three-dimensional anatomical models in order to create the final three-dimensional representation 1170 of the patient anatomical and functional characteristics (1170).

A system for the modeling of 3D anatomy based on pre-operative MRI scans has been disclosed. The system enables the creation of patient-specific digital twins in a matter of minutes, greatly reducing the amount user interactions needed. The 3D models can be exported for visualization, interaction and 3D printing.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Although a flow chart may describe operations as a sequential process, many of the operations may be performed in parallel, concurrently or simultaneously. Also, some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

In the present description, the wording "means configured to perform a function" or "means for performing a function" may correspond to one or more functional blocks comprising circuitry that is adapted for performing or configured to perform this function. The block may perform itself this function or may cooperate and / or communicate with other one or more blocks to perform this function. The "means" may correspond to or be implemented as "one or more modules", "one or more devices", "one or more units", etc.

When implemented in software, firmware, middleware or microcode, instructions to perform the necessary tasks may be stored in a computer readable medium that may be or not included in a host device or system. The instructions may be transmitted over the computer-readable medium and be loaded onto the host device or system. The instructions are configured to cause the host device / system to perform one or more functions disclosed herein. For example, as mentioned above, according to one or more examples, at least one memory may include or store instructions, the at least one memory and the instructions may be configured to, with at least one processor, cause the host device / system to perform the one or more functions. Additionally, the processor, memory and instructions, serve as means for providing or causing performance by the host device / system of one or more functions disclosed herein.

The host device or system may be a general-purpose computer and / or computing system, a special purpose computer and / or computing system, a programmable processing apparatus and / or system, a machine, etc. The host device or system may be or include a user equipment, client device, mobile phone, laptop, computer, network element, data server, network resource controller, network apparatus, router, gateway, network node, computer, cloud-based server, web server, application server, proxy server, etc.

The instructions may correspond to computer program instructions, computer program code and may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processing circuit may correspond to a digital signal processor (DSP), a network processor, an application specific integrated circuit (ASIC), a field programmable gate array (FPGA), a System-on-Chips (SoC), a Central Processing Unit (CPU), a Processing Unit (CPU), an arithmetic logic unit (ALU), a programmable logic unit (PLU), a processing core, a programmable logic, a microprocessor, a controller, a microcon-

EP 4 390 837 A1

troller, a microcomputer, any device capable of responding to and/or executing instructions in a defined manner and/or according to a defined logic. Other hardware, conventional or custom, may also be included. A processor may be configured to execute instructions adapted for causing the performance by a host device or system of one or more functions disclosed herein for the concerned device or system.

A computer readable medium or computer readable storage medium may be any storage medium suitable for storing instructions readable by a computer or a processor. A computer readable medium may be more generally any storage medium capable of storing and/or containing and/or carrying instructions and/or data. A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, memory card, random access memory (RAM), read only memory (ROM), core memory, flash memory, or any other non-volatile storage.

A memory suitable for storing instructions may be a random-access memory (RAM), read only memory (ROM), and/or a permanent mass storage device, such as a disk drive, memory card, random access memory (RAM), read only memory (ROM), core memory, flash memory, or any other non-volatile storage.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected" or "coupled" to another element, it can be directly connected or coupled to the other element or intervening elements may be present. By contrast, when an element is referred to as being "directly connected" or "directly coupled" to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

CITED REFERENCES

[1] K. He, X. Zhang, S. Ren, and J. Sun. "Deep residual learning for image recognition". In 2016 IEEE Conference on Computer Vision and Pattern Recognition (CVPR), pages 770-778, Los Alamitos, CA, USA, jun 2016. IEEE Computer Society.

[2] Ron Kikinis, Steve D. Pieper, and Kirby G. Vosburgh. "3D Slicer: A Platform for Subject-Specific Image Analysis, Visualization, and Clinical Support", pages 277-289. Springer New York, New York, NY, 2014.

[3] Shaoqing Ren, Kaiming He, Ross Girshick, and Jian Sun. Faster r-cnn: Towards real-time object detection with region proposal networks. In C. Cortes, N. Lawrence, D. Lee, M. Sugiyama, and R. Garnett, editors, Advances in Neural Information Processing Systems, volume 28. Curran Associates, Inc., 2015.

[4] Olaf Ronneberger, Philipp Fischer, and Thomas Brox. U-net: Convolutional networks for biomedical image segmentation. In Nassir Navab, Joachim Hornegger, William M. Wells, and Alejandro F. Frangi, editors, Medical Image Computing and Computer-Assisted Intervention MICCAI 2015, pages 234-241, Cham, 2015. Springer International Publishing.

[5] Konstantin Sofiiuk, Ilia A. Petrov, and Anton Konushin. Reviving Iterative Training with Mask Guidance for Interactive Segmentation. arXiv e-prints, page arXiv:2102.06583, Feb. 2021.

[6] N. J. Tustison, B. B. Avants, P. A. Cook, Y. Zheng, A. Egan, P. A. Yushkevich, and J. C. Gee. N4itk: Improved n3 bias correction. IEEE Transactions on Medical Imaging, 29(6):1310-1320, 2010.

[7] S. Ren, K. He, R. Girshick, and J. Sun, "Faster R-CNN: Towards Real-Time Object Detection with Region Proposal Networks,"

[8] F. Isensee et al., "nnU-Net: Self-adapting Framework for U-Net-Based Medical Image Segmentation"

[9] Sofiiuk K., Petrov I., Konushin A., "Reviving Iterative Training with Mask Guidance for Interactive Segmentation"

[10] Mori, S.; Crain, B. J.; Chacko, V. P. & van Zijl, P. C. M. Three-dimensional tracking of axonal projections in the brain by magnetic resonance imaging. Annals of Neurology, 1999, 45, 265-269

[11] Deng J, Dong W, Socher R, Li L-J, Li K, Fei-Fei L. Imagenet: A large-scale hierarchical image database. In:

2009 IEEE conference on computer vision and pattern recognition. 2009. p. 248-55.

**Claims**

1. A method for generating segmented images representing anatomic structures including at least one bone, at least one organ or at least one vessel, the method comprising:

   - performing (830) a segmentation of an input image to generate a first segmented image (74c1) by detecting voxels that represent a bone using a first 3D convolutional neural network, CNN, applied to the input image, wherein the first 3D CNN is a bones specific neural network trained to detect one or more bones in an image;
   - performing (830) a segmentation of the input image to generate a second segmented image (74c2) by detecting voxels that represent an organ using a second 3D CNN applied to the input image, wherein the second 3D CNN is an organ specific neural network trained to detect one or more organs in an image;
   - performing (830) a segmentation of the input image to generate a third segmented image (74c3) by detecting voxels that represent a vessel using a third 3D CNN applied to the input image, wherein the third 3D CNN is a vessel specific neural network trained to detect one or more vessels in an image;
   - performing (830) a segmentation of the input image to generate a fourth segmented image (74c4) by detecting voxels that represent a bone, an organ or a vessel using a fourth 3D CNN applied to the input image, wherein the third 3D CNN is a multi-structure neural network trained to detect bones, vessels and at least one organ in an image;
   - generating (840) an aggregated segmented image (75b) by combining the first, second, third and fourth segmented images.

2. A method according to claim 1, wherein a voxel in the aggregated image is a corresponding voxel of the fourth segmented image if the corresponding voxels in the first, second, third segmented images are detected as representing distinct anatomic structures.

3. A method according to claim 1 or 2, wherein one or more or each of the first, second, third and fourth 3D CNNs is based on a U-Net architecture.

4. A method according to any of claims 1 to 3, comprising

   - obtaining 3D representation of fibers present in the input image;
   - detecting at least one fiber representing a nerve in the input image using the output segmented image and nerve definitions, wherein a definition of a nerve is expressed in the form of one or more spatial relationships between the nerve and one or more anatomical structures detected in the output segmented image and using a fuzzy 3D anatomical area corresponding to the nerve definition.

5. A method according to claim 4, wherein a score is associated to each voxel in the fuzzy anatomical 3D area, wherein the method comprises

   - computing for each of one or more fibers a fiber score as the sum of scores of voxels representing the concerned fiber that fall in the fuzzy 3D anatomical area, wherein a detected nerve is represented by at least one fiber that is fully or partly within the fuzzy anatomical 3D area and has a score higher than a threshold.

6. A method according to claim 4 or 5, wherein the method comprises

   - obtaining a segmentation mask of an anatomical structure used in the nerve definition;
   - obtaining the fuzzy anatomical 3D area by dilating the segmentation mask based on a structuring element, the structuring element encoding at least one of a direction information, path information and connectivity information of a spatial relationship of the nerve definition.

7. A method according to any of the preceding claims, wherein one or more or each of the first, second, third and fourth 3D CNNs has been trained using a loss function defined as a weighted sum of specific loss functions, wherein weighting coefficients of the weighted sum are specific to the considered 3D CNNs.

8. A method according to claim 7, wherein a first specific loss function measures an accuracy based on global information over a 3D volume in a reference segmented image and a current segmented image.

9. A method according to claim 7 or 8, wherein a second specific loss function measures local consistency between voxels in a reference segmented image and a current segmented image.

10. A method according to claim 7, 8 or 9, wherein a third specific loss function measures a distance between boundary points of a reference segmented image and a current segmented image.

11. A method according to any of claims 6 to 10, wherein the weighting coefficients vary dynamically during the training of the 3D CNNs.

12. A method according to any of the preceding claims, wherein one or more or each of the first, second, third and fourth 3D CNNs has been trained using image patches extracted from the input image, wherein the centers of the image patches have coordinates determined using a sampling algorithm adapted to the type of anatomic structure to be detected by the considered 3D CNNs.

13. A method according to any of the preceding claims, the method comprising:

   - determining for the input image a bounding box of interest using a deep regression network;
   - applying one or more or each of the first, second, third and fourth 3D CNNs only to the bounding box of interest.

14. A method according to any of the preceding claims, the method comprising:

   - displaying a segmented image generated by one of the CNNs, the concerned CNN including one or more additional convolutional layers whose output are merged respectively with inputs of corresponding encoder blocks of the concerned CNN;
   - generating a segmentation mask of an anatomical structure in the segmented image;
   - allowing a user to select in the displayed segmented image one or more voxels encoded as a false positive or false negative;
   - providing the segmentation mask and the selected voxels as input image to the one or more additional convolutional layers.

15. An apparatus comprising means for performing the steps of a method according to any of the preceding claims.

FIG. 1

EP 4 390 837 A1

```
┌─────────────────────────────┐
│   Obtaining training data    │  200
└─────────────────────────────┘
              │
              ▼
┌─────────────────────────────┐
│ Preprocessing training raw images │  210
└─────────────────────────────┘
              │
              ▼
┌─────────────────────────────────────┐
│ Training bounding box detection network │  220
└─────────────────────────────────────┘
              │
              ▼
┌─────────────────────────────┐
│      Patch extraction        │  230
└─────────────────────────────┘
              │
              ▼
┌──────────────┐   ┌─────────────────────────────────┐
│  Automatic   │◄──│  Training segmentation networks  │  235
│  refinement  │──►│                                  │
└──────────────┘   └─────────────────────────────────┘
    236                        │
                               ▼
                   ┌─────────────────────────────┐
                   │        Aggregation           │  240
                   └─────────────────────────────┘
```

FIG. 2

(a) Sex Distribution

(b) Age Distribution by Sex

FIG. 3

FIG. 4

FIG. 5

FIG. 6

FIG. 7

```
┌─────────────────────────────┐
│         new image           │  800
└─────────────────────────────┘
              │
              ▼
┌─────────────────────────────┐
│      preprocessing image    │  810
└─────────────────────────────┘
              │
              ▼
┌─────────────────────────────┐
│    bounding box detection   │  820
└─────────────────────────────┘
              │
              ▼
┌─────────────────────────────┐      ┌──────────────────┐
│ 830      segmentation       │ ───► │   interactive    │  835
│                             │ ◄─── │   refinement     │
└─────────────────────────────┘      └──────────────────┘
              │
              ▼
┌─────────────────────────────┐
│ 840      aggregation        │
└─────────────────────────────┘
              │
              ▼
┌─────────────────────────────┐
│ 850      smoothing          │
└─────────────────────────────┘
```

FIG. 8

FIG. 9

FIG. 10

Obtaining 3D representation of fibers — 1090

Obtaining a nerve definition — 1091

Converting the nerve definition into a set of at least one spatial relationship with respect to one or more anatomical structures — 1092

Computing a structuring element for each spatial relationship — 1093

Computing a segmentation mask for each anatomical structure — 1094

Generate a fuzzy 3D anatomical area for each spatial relationship — 1095

Combine the fuzzy 3D anatomical areas — 1096

Compute fiber score based on the combined fuzzy 3D anatomical areas — 1097

geometrical fuzzy region

FIG. 11A

anatomical fuzzy region

FIG. 11B

FIG. 11C

FIG. 12

Europäisches
Patentamt

European
Patent Office

Office européen
des brevets

# EUROPEAN SEARCH REPORT

Application Number

EP 22 30 7002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OGREAN, VALENTIN, AND REMUS BRAD: "Multi-Organ Segmentation Using a Low-Resource Architecture", INFORMATION, vol. 13, no. 10, 30 September 2022 (2022-09-30), page 472, XP093026376, DOI: 10.3390/info13100472 | 1-3,7-15 | INV. G06T7/00 G06T7/11 |
| Y | * page 3 - page 6; figure 2 * ----- | 1-3,7-15 | |
| Y | EP 3 316 217 B1 (SIEMENS HEALTHCARE GMBH [DE]) 22 May 2019 (2019-05-22) * abstract * ----- | 1-3,7-15 | |
| X | Alessandro Delmonte: "Segmentation of White Matter Tractograms Using Fuzzy Spatial Relations", , 31 March 2018 (2018-03-31), pages 1-121, XP93029825, Retrieved from the Internet: URL:https://webthesis.biblio.polito.it/7184/1/tesi.pdf [retrieved on 2023-03-07] * page 53 - page 71 * ----- | 4-6 | |

TECHNICAL FIELDS
SEARCHED (IPC)

G06T

The present search report has been drawn up for all claims

| Place of search | Date of completion of the search | Examiner |
|---|---|---|
| Munich | 9 March 2023 | Tibrewal-Fabricius |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 7002

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2023

| Patent document cited in search report | | Publication date | Patent family member(s) | | Publication date |
|---|---|---|---|---|---|
| EP 3316217 | B1 | 22-05-2019 | CN | 107997778 A | 08-05-2018 |
| | | | EP | 3316217 A1 | 02-05-2018 |
| | | | US | 2018116620 A1 | 03-05-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Deep residual learning for image recognition. **K. HE ; X. ZHANG ; S. REN ; J. SUN.** 2016 IEEE Conference on Computer Vision and Pattern Recognition (CVPR). IEEE Computer Society, June 2016, 770-778

- **RON KIKINIS ; STEVE D. PIEPER ; KIRBY G. VOSBURGH.** 3D Slicer: A Platform for Subject-Specific Image Analysis, Visualization, and Clinical Support. Springer, 2014, 277-289

- Faster r-cnn: Towards real-time object detection with region proposal networks. **SHAOQING REN ; KAIMING HE ; ROSS GIRSHICK ; JIAN SUN.** Advances in Neural Information Processing Systems. Curran Associates, Inc, 2015, vol. 28

- U-net: Convolutional networks for biomedical image segmentation. **OLAF RONNEBERGER ; PHILIPP FISCHER ; THOMAS BROX.** Medical Image Computing and Computer-Assisted Intervention MICCAI 2015. Springer International Publishing, 2015, 234-241

- **KONSTANTIN SOFIIUK ; ILIA A. PETROV ; ANTON KONUSHIN.** Reviving Iterative Training with Mask Guidance for Interactive Segmentation. *arXiv:2102.06583,* February 2021

- **N. J. TUSTISON ; B. B. AVANTS ; P. A. COOK ; Y. ZHENG ; A. EGAN ; P. A. YUSHKEVICH ; J. C. GEE.** N4itk: Improved n3 bias correction. *IEEE Transactions on Medical Imaging,* 2010, vol. 29 (6), 1310-1320

- **S. REN ; K. HE ; R. GIRSHICK ; J. SUN.** *Faster R-CNN: Towards Real-Time Object Detection with Region Proposal Networks*

- **F. ISENSEE et al.** *nnU-Net: Self-adapting Framework for U-Net-Based Medical Image Segmentation*

- **SOFIIUK K. ; PETROV I. ; KONUSHIN A.** *Reviving Iterative Training with Mask Guidance for Interactive Segmentation*

- **MORI, S. ; CRAIN, B. J. ; CHACKO, V. P. ; VAN ZIJL, P. C. M.** Three-dimensional tracking of axonal projections in the brain by magnetic resonance imaging. *Annals of Neurology,* 1999, vol. 45, 265-269

- **DENG J ; DONG W ; SOCHER R ; LI L-J ; LI K ; FEI-FEI L.** Imagenet: A large-scale hierarchical image database. *2009 IEEE conference on computer vision and pattern recognition,* 2009, 248-55